# EUROPEAN PATENT APPLICATION

(11) **EP 4 843 797 A1**
(43) Date of publication of application: **25.11.2026**
(21) Application number: 26173583.1
(22) Date of filing: 21.04.2026
(51) Int. Cl.: B60C 23/06

(54) **DETECTION DEVICE, DETECTION METHOD, AND DETECTION PROGRAM**

(30) Priority: 21.05.2025 JP 2025085050
(71) Applicant: SUMITOMO RUBBER INDUSTRIES, LTD., Kobe-shi, Hyogo 651-0072 (JP)
(72) Inventor: OKAWA, Ryuichi, Chuo-ku, Kobe-shi, Hyogo, 651-0072 (JP)
(74) Representative: TBK

(57) **Abstract**

An object is to detect, with high accuracy, replacement of only one wheel among a plurality of tires included in a vehicle. A detection device detects replacement of only one wheel, by using: the absolute value of the difference between a current first deflation determination value which is a first deflation determination value calculated after a vehicle that has been stopped restarts traveling and a first deflation reference value used for comparison with the first deflation determination value to detect deflation of a tire; and the slope of the regression line of the current first deflation determination value with respect to the traveling time during the restarted traveling.

## Description

### BACKGROUND OF THE INVENTION

### Field of the Invention

The present invention relates to a detection device, a detection method, and a detection program for determining whether replacement of only one wheel with a new tire has been performed for a vehicle including a plurality of tires.

### Background Art

Conventionally, various tire pressure warning devices (Tire Pressure Monitoring Systems, TPMSs) that detect a decrease in the air pressure of a tire mounted on a vehicle and issue a warning to the driver to urge the driver to take appropriate action, have been proposed. Furthermore, with respect to such TPMSs, attempts made to detect air filling and tire replacement for tires mounted on a vehicle have been known. For example, European Patent No. 3676109 (B1) discloses a tire change status determination system that determines whether a plurality of tires mounted on a vehicle have been filled with air (re-filled) or replaced, based on the similarity between previous and current values of at least one reference parameter that is usable for indirect tire pressure monitoring.

Here, although the term "tire replacement" is simply recited, if a vehicle includes a plurality of tires, there are at least "replacement of only one wheel (with a new tire)", "swapping of front and rear wheel tires", and "replacement of all of the tires". However, European Patent No. 3676109 (B1) neither discloses nor suggests a method for detecting tire replacement of only one wheel among a plurality of tires included in a vehicle.

In one aspect, the present invention has been made in view of the above circumstances, and an object of the present invention is to provide a detection device, etc., capable of detecting, with high accuracy, tire replacement of only one wheel among a plurality of tires included in a vehicle.

### SUMMARY OF THE INVENTION

A detection device according to a first aspect of the present invention is a detection device capable of detecting a decrease in air pressure of each of four tires mounted on a vehicle. The detection device according to the first aspect includes an acquisition unit, a calculation unit, and an event determination unit. The acquisition unit acquires rotation speed signals indicating respective rotation speeds of the four tires. The calculation unit calculates a first deflation determination value indicating a comparison between a sum of rotation speeds of a pair of tires located on a diagonal line among the four tires and a sum of rotation speeds of another pair of tires located on a diagonal line, from the respective rotation speeds of the four tires indicated by the rotation speed signals. The event determination unit determines whether replacement of only one wheel among the four tires with a new tire has been performed during a stopped time from when the vehicle stops until the vehicle restarts traveling, by using the first deflation determination value. In the detection device according to the first aspect, the event determination unit determines that replacement of only one wheel among the four tires with a new tire has been performed during the stopped time, if: an absolute value of a difference between a current first deflation determination value which is the first deflation determination value calculated during the restarted traveling and a first deflation reference value used for comparison with the first deflation determination value to detect the decrease in air pressure is equal to or greater than a predetermined first threshold value; and a slope of a regression line of the current first deflation determination value with respect to a traveling time during the restarted traveling is equal to or greater than a predetermined second threshold value and equal to or less than a predetermined third threshold value.

In a detection device according to a second aspect of the present invention based on the detection device according to the first aspect, the event determination unit may further determine whether air filling of only one wheel among the four tires has been performed during the stopped time, by using the first deflation determination value and the first deflation reference value. The event determination unit may determine that air filling of only one wheel among the four tires has been performed during the stopped time, if: an absolute value of a difference between a previous first deflation determination value which is the first deflation determination value calculated last during traveling immediately before the stopping and the current first deflation determination value is equal to or greater than a predetermined fourth threshold value; and an absolute value of a difference between the first deflation reference value and the current first deflation determination value is smaller than an absolute value of a difference between the first deflation reference value and the previous first deflation determination value.

In a detection device according to a third aspect of the present invention based on the detection device according to the first or second aspect, the calculation unit may further calculate a third deflation determination value indicating a comparison between a sum of rotation speeds of front and rear wheel tires on a left side and a sum of rotation speeds of front and rear wheel tires on a right side among the four tires, from the respective rotation speeds of the four tires indicated by the rotation speed signals. In the detection device according to the third aspect, the event determination unit may further determine whether swapping of a left front wheel tire and a left rear wheel tire and swapping of a right front wheel tire and a right rear wheel tire among the four tires have been performed during the stopped time, by using the first deflation determination value and the third deflation determination value. The event determination unit may determine that swapping of the left front wheel tire and the left rear wheel tire and swapping of the right front wheel tire and the right rear wheel tire among the four tires have been performed during the stopped time, if: an absolute value of a difference between a previous first deflation determination value which is the first deflation determination value calculated last during traveling immediately before the stopping and the current first deflation determination value is equal to or greater than a predetermined fifth threshold value; a sign of the previous first deflation determination value is different from a sign of the current first deflation determination value; an absolute value of a difference between an absolute value of the previous first deflation determination value and an absolute value of the current first deflation determination value is equal to or less than a predetermined sixth threshold value; and an absolute value of a difference between a previous third deflation determination value which is the third deflation determination value calculated last during traveling immediately before the stopping and a current third deflation determination value which is the third deflation determination value calculated during the restarted traveling is equal to or less than a predetermined seventh threshold value.

In a detection device according to a fourth aspect of the present invention based on the detection device according to any one of the first to third aspects, the calculation unit may further calculate respective resonance frequencies of left and right wheel tires on the same axle among the four tires from the rotation speed signals. In the detection device according to the fourth aspect, the event determination unit may further determine whether air filling of all of the four tires has been performed during the stopped time, by using the respective resonance frequencies of the left and right wheel tires. The event determination unit may determine that air filling of all of the four tires has been performed during the stopped time, if, for both of the left and right wheel tires, an amount of increase in a current resonance frequency, which is the resonance frequency calculated during the restarted traveling, with respect to a previous resonance frequency which is the resonance frequency calculated last during traveling immediately before the stopping is equal to or greater than a predetermined eighth threshold value.

In a detection device according to a fifth aspect of the present invention based on the detection device according to any one of the first to fourth aspects, the calculation unit may further calculate respective resonance frequencies of left and right wheel tires on the same axle among the four tires from the rotation speed signals. In the detection device according to the fifth aspect, the event determination unit may further determine whether replacement of all of the four tires has been performed during the stopped time, by using the first deflation determination value and the respective resonance frequencies of the left and right wheel tires. The event determination unit may determine whether a difference between a left previous resonance frequency which is the resonance frequency calculated last during traveling immediately before the stopping for the left wheel tire among the left and right wheel tires and a right previous resonance frequency which is the resonance frequency calculated last during traveling immediately before the stopping for the right wheel tire among the left and right wheel tires is equal to or greater than a predetermined ninth threshold value. When the difference between the left previous resonance frequency and the right previous resonance frequency is equal to or greater than the ninth threshold value, the event determination unit may determine that replacement of all of the four tires has been performed during the stopped time, if: at least one of an absolute value of a difference between a left current resonance frequency which is the resonance frequency calculated during the restarted traveling for the left wheel tire among the left and right wheel tires and the left previous resonance frequency and an absolute value of a difference between a right current resonance frequency which is the resonance frequency calculated during the restarted traveling for the right wheel tire among the left and right wheel tires and the right previous resonance frequency is equal to or greater than a predetermined tenth threshold value; and an absolute value of a difference between a previous first deflation determination value which is the first deflation determination value calculated last during traveling immediately before the stopping and the current first deflation determination value is equal to or greater than a predetermined eleventh threshold value. When the difference between the left previous resonance frequency and the right previous resonance frequency is less than the ninth threshold value, the event determination unit may determine that replacement of all of the four tires has been performed during the stopped time, if: both the absolute value of the difference between the left current resonance frequency and the left previous resonance frequency and the absolute value of the difference between the right current resonance frequency and the right previous resonance frequency are equal to or greater than the tenth threshold value; and the absolute value of the difference between the previous first deflation determination value and the current first deflation determination value is equal to or greater than the eleventh threshold value.

A detection method according to a sixth aspect of the present invention is executed by a computer configured to be capable of detecting a decrease in air pressure of each of four tires mounted on a vehicle, and includes the following steps. In addition, a detection program according to a seventh aspect of the present invention causes a computer, which is configured to be capable of detecting a decrease in air pressure of each of four tires mounted on a vehicle, to execute the following steps.
· a step of acquiring rotation speed signals indicating respective rotation speeds of the four tires.
· a step of calculating a first deflation determination value indicating a comparison between a sum of rotation speeds of a pair of tires located on a diagonal line among the four tires and a sum of rotation speeds of another pair of tires located on a diagonal line, from the respective rotation speeds of the four tires indicated by the rotation speed signals.
· a step of determining whether replacement of only one wheel among the four tires with a new tire has been performed during a stopped time from when the vehicle stops until the vehicle restarts traveling, by using the first deflation determination value.
In the step of determining, the computer determines that replacement of only one wheel among the four tires with a new tire has been performed during the stopped time, if: an absolute value of a difference between a current first deflation determination value which is the first deflation determination value calculated during the restarted traveling and a first deflation reference value used for comparison with the first deflation determination value to detect the decrease in air pressure is equal to or greater than a predetermined first threshold value; and a slope of a regression line of the current first deflation determination value with respect to a traveling time during the restarted traveling is equal to or greater than a predetermined second threshold value and equal to or less than a predetermined third threshold value.

According to the present invention, it is possible to provide a detection device, etc., capable of detecting, with high accuracy, tire replacement of only one wheel among a plurality of tires included in a vehicle.

### BRIEF DESCRIPTION OF THE DRAWINGS

FIG. 1 is a schematic diagram showing a schematic configuration of a vehicle including a detection device according to an embodiment of the present invention;
FIG. 2 illustrates an image of a case where a first event (replacement of only one wheel among four tires with a new tire) has been performed on the vehicle illustrated in FIG. 1;
FIG. 3 illustrates an image of a case where a second event (air filling of only one wheel among the four tires) has been performed on the vehicle illustrated in FIG. 1;
FIG. 4 illustrates an image of a case where a third event (swapping of front and rear wheel tires) has been performed on the vehicle illustrated in FIG. 1;
FIG. 5 illustrates an image of a case where a fourth event (air filling of all of the four tires) has been performed on the vehicle illustrated in FIG. 1;
FIG. 6 illustrates an image of a case where a fifth event (replacement of all of the four tires) has been performed on the vehicle illustrated in FIG. 1;
FIG. 7 is a block diagram showing the electrical configuration of the detection device according to the embodiment of the present invention;
FIG. 8 illustrates an image of a case where the detection device according to the embodiment of the present invention detects the first event;
FIG. 9 illustrates an image of a case where the detection device according to the embodiment of the present invention detects the second event;
FIG. 10 illustrates an image of a case where the detection device according to the embodiment of the present invention detects the third event;
FIG. 11 illustrates an image of a case where the detection device according to the embodiment of the present invention detects the fourth event;
FIG. 12 illustrates an image of a case where the detection device according to the embodiment of the present invention detects the fifth event;
FIG. 13 is a flowchart showing the flow of a process common to five event detection processes including a first event detection process to a fifth event detection process;
FIG. 14 is a flowchart showing the flow of a process specific to the first event detection process;
FIG. 15 is a flowchart showing the flow of a process specific to the second event detection process;
FIG. 16 is a flowchart showing the flow of a process specific to the third event detection process;
FIG. 17 is a flowchart showing the flow of a process specific to the fourth event detection process; and
FIG. 18 is a flowchart showing the flow of a process specific to the fifth event detection process.

### DETAILED DESCRIPTION

Hereinafter, an embodiment according to one aspect of the present invention (hereinafter also referred to as "present embodiment") will be described with reference to the drawings. However, the present embodiment described below is merely an example of the present invention in all respects. It is needless to say that various improvements and modifications can be made without departing from the scope of the present invention. That is, in implementing the present invention, specific configurations corresponding to the embodiment may be adopted as appropriate. Although data that appears in the present embodiment is described in natural language, more specifically, the data is designated by pseudo-language, commands, parameters, machine language, etc., that are recognizable by a computer.

### §1 Application Example

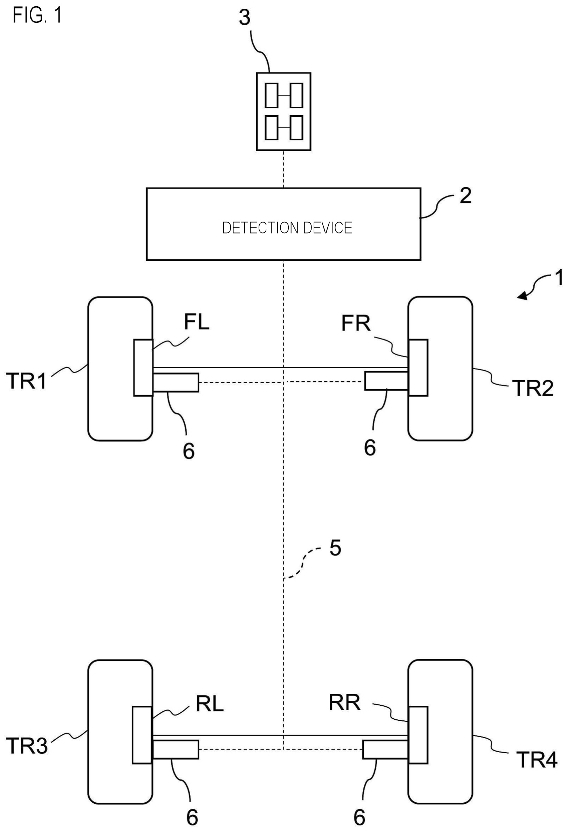

FIG. 1 is a block diagram illustrating a schematic configuration of a vehicle 1 including a detection device (detection device 2) according to the present embodiment. The vehicle 1 is an example of a "vehicle" of the present invention, and the vehicle 1 according to the present embodiment is, for example, a four-wheeled vehicle. The vehicle 1 illustrated in FIG. 1 includes a left front wheel FL, a right front wheel FR, a left rear wheel RL, and a right rear wheel RR. The vehicle 1 includes tires TR1, TR2, TR3, and TR4 mounted on these wheels. In the example shown in FIG. 1, the tire TR1 is a left front wheel tire mounted on the left front wheel FL, the tire TR2 is a right front wheel tire mounted on the right front wheel FR, the tire TR3 is a left rear wheel tire mounted on the left rear wheel RL, and the tire TR4 is a right rear wheel tire mounted on the right rear wheel RR. In the present embodiment, when it is not necessary to particularly distinguish each of the tires TR1, TR2, TR3, and TR4, these tires are sometimes simply referred to as "tire TR".

As illustrated in FIG. 1, the vehicle 1 includes the detection device 2, a display unit 3, the tires TR, and wheel speed sensors 6. In the vehicle 1, the detection device 2, the display unit 3, and the wheel speed sensors 6 are connected to each other via a communication line 5, thereby enabling mutual transmission and reception of information (in other words, input and output of information). The communication line 5 may be, for example, a communication line capable of implementing an in-vehicle LAN such as CAN (Controller Area Network) or the like.

The detection device 2 can detect deflation of each of the tires TR1, TR2, TR3, and TR4, that is, can detect a decrease in the air pressure of each of the four tires TR mounted on the vehicle 1. For example, the detection device 2 is implemented as a tire pressure warning device (Tire Pressure Monitoring System; TPMS) that detects deflation (in other words, a decrease in tire air pressure) of each tire TR and issues a warning to an occupant of the vehicle such as the driver to urge the occupant to take appropriate action.

The detection device 2 according to the present embodiment can further determine whether a first event Ev1 which is "replacement of only one wheel among the four tires TR with a new tire" has been performed, that is, can detect the first event Ev1. In addition, the detection device 2 can determine whether any of a second event Ev2, a third event Ev3, a fourth event Ev4, and a fifth event Ev5 which will be described below has been performed, that is, can detect each of the second event Ev2, the third event Ev3, the fourth event Ev4, and the fifth event Ev5. The second event Ev2 is "air filling of only one wheel among the four tires TR". The third event Ev3 is "swapping of the left front wheel tire TR1 and the left rear wheel tire TR3 and swapping of the right front wheel tire TR2 and the right rear wheel tire TR4 among the four tires TR". The fourth event Ev4 is "air filling of all of the four tires TR". The fifth event Ev5 is "replacement of all of the four tires TR". In the present embodiment, when it is not necessary to particularly distinguish each of the first event Ev1, second event Ev2, third event Ev3, fourth event Ev4, and fifth event Ev5, these events are sometimes simply referred to as "event Ev". The detection device 2 can determine whether any of the five types of events Ev including the first event Ev1 to the fifth event Ev5 has been performed, that is, can detect each of the five types of events Ev. The detection device 2 according to the present embodiment determines whether at least one of the five types of events Ev including the first event Ev1 to the fifth event Ev5 has been performed.

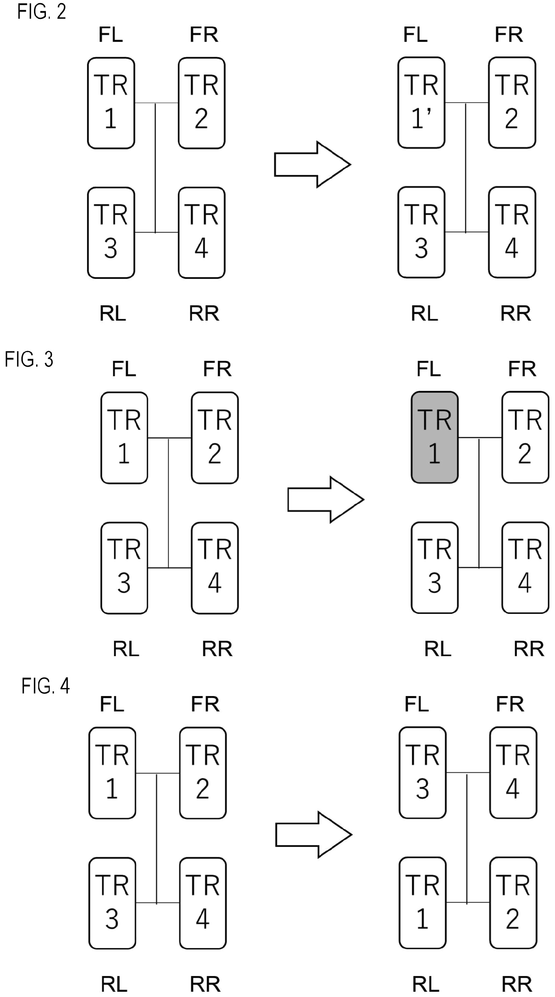

FIG. 2 illustrates an image of a case where the first event Ev1, that is, replacement of only one wheel among the four tires TR of the vehicle 1 with a new tire, has been performed on the vehicle 1. Specifically, in the example shown in FIG. 2, among the left front wheel FL, the right front wheel FR, the left rear wheel RL, and the right rear wheel RR, the tire TR on only the left front wheel FL has been changed from the tire TR1 to a tire TR1' which is a new tire. However, the wheel (tire TR) on which replacement with a new tire is performed in the first event Ev1 may be the right front wheel FR, the left rear wheel RL, or the right rear wheel RR. The first event Ev1 only needs to be an event Ev in which replacement with a new tire is performed on only one wheel among the left front wheel FL, the right front wheel FR, the left rear wheel RL, and the right rear wheel RR.

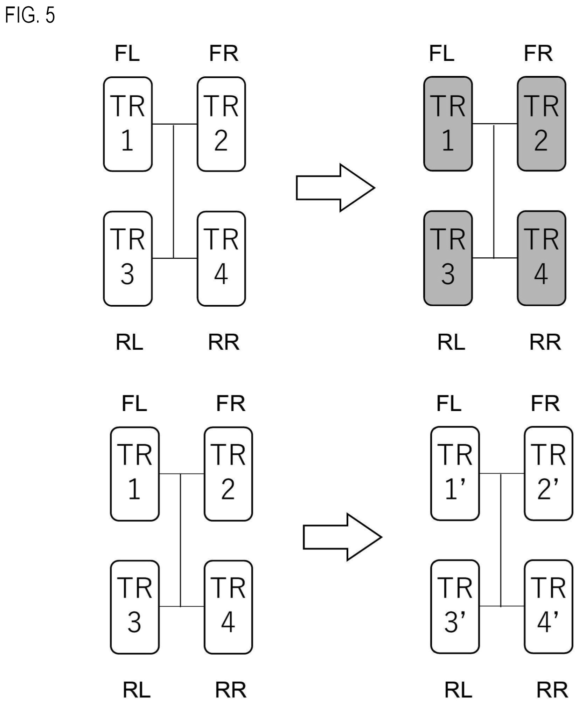

FIG. 3 illustrates an image of a case where the second event Ev2, that is, air filling of one wheel among the four tires TR of the vehicle 1, has been performed on the vehicle 1. In FIG. 3 and FIG. 5, the tires TR on which air filling has been performed are shaded in gray to distinguish these tires TR from the tires TR on which air filling has not been performed. Specifically, FIG. 3 shows an example in which air filling has been performed on only the tire TR1, which is the left front wheel FL, among the tires TR1, TR2, TR3, and TR4. However, the tire TR on which air filling is performed in the second event Ev2 may be the tire TR2, the tire TR3, or the tire TR4. The second event Ev2 only needs to be an event Ev in which air filling is performed on only one wheel among the tires TR1, TR2, TR3, and TR4.

FIG. 4 illustrates an image of a case where the third event Ev3, that is, swapping of the tire TR1 and the tire TR3 and swapping of the tire TR2 and the tire TR4 among the four tires TR of the vehicle 1, have been performed on the vehicle 1. In the example shown in FIG. 4, the tire TR1 mounted on the left front wheel FL is swapped with the tire TR3 mounted on the left rear wheel RL, and the tire TR2 mounted on the right front wheel FR is swapped with the tire TR4 mounted on the right rear wheel RR. As a result of performing the third event Ev3, as illustrated on the right side of FIG. 4, in the vehicle 1, the tire TR3 is mounted on the left front wheel FL, the tire TR4 is mounted on the right front wheel FR, the tire TR1 is mounted on the left rear wheel RL and the tire TR2 is mounted on the right rear wheel RR.

FIG. 5 illustrates an image of a case where the fourth event Ev4, that is, air filling of all of the four tires TR of the vehicle 1, has been performed on the vehicle 1. Specifically, FIG. 5 shows an example in which air filling has been performed on each of the tires TR1, TR2, TR3, and TR4.

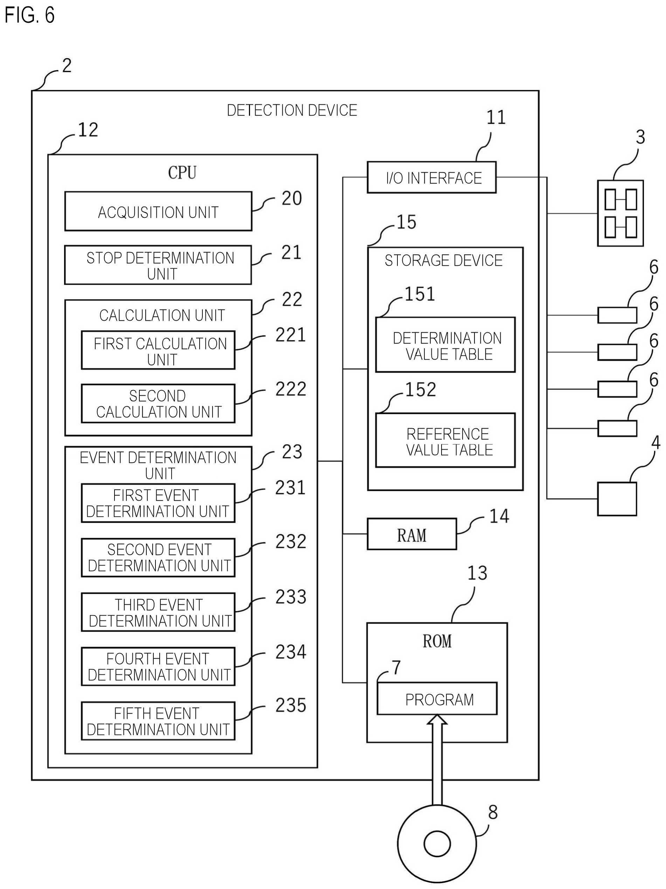

FIG. 6 illustrates an image of a case where the fifth event Ev5, that is, replacement of all of the four tires TR of the vehicle 1, has been performed on the vehicle 1. In the example shown in FIG. 6, tire replacement has been performed on each of the left front wheel FL, the right front wheel FR, the left rear wheel RL, and the right rear wheel RR. Specifically, the left front wheel FL has been replaced, changing from the tire TR1 to a tire TR1', the right front wheel FR has been replaced, changing from the tire TR2 to a tire TR2', the left rear wheel RL has been replaced, changing from the tire TR3 to a tire TR3', and the right rear wheel RR has been replaced, changing from the tire TR4 to a tire TR4'. The replacement in the fifth event Ev5 does not necessarily have to be replacement with new tires. Referring to the example shown in FIG. 6, at least one of the tires TR1', TR2', TR3', and TR4' does not have to be a new tire.

Upon detecting a decrease in the air pressure of a tire TR, the detection device 2 illustrated in FIG. 1 can issue a warning about the decrease in the air pressure via the display unit 3 installed in the vehicle 1. For example, if the air pressure of at least one of the four tires TR has decreased beyond a threshold value (e.g., 20% to 25%) from a normal internal pressure (Normal Pressure, NP), the detection device 2 determines that an air pressure decrease (deflation) has occurred, and issues a warning about the air pressure decrease. Furthermore, when the detection device 2 determines that at least one of the above five types of events Ev has been performed, the detection device 2 can notify the occupant, such as the driver of the vehicle 1, of the result of this determination via the display unit 3. Together with or instead of the determination result that at least one of the five types of events Ev has been performed, the detection device 2 may notify the occupant with a reset recommendation message. The reset recommendation message is a message that prompts the occupant of the vehicle 1 to reset a reference value RV used by the detection device 2 to detect a decrease in the air pressure of a tire TR. In the present embodiment, the reference value RV is also referred to as "learning value". When the event Ev is performed, in order for the detection device 2 to accurately detect a decrease in the air pressure of a tire TR, it is desirable to use a new reference value RV' corresponding to the event Ev after the event Ev is performed, rather than the reference value RV used before the event Ev is performed. Therefore, when the detection device 2 determines that at least one of the above five types of events Ev has been performed, the detection device 2 may output a reset recommendation message to urge the occupant to reset the learning value for detecting an air pressure decrease from the reference value RV to a reference value RV'. The reference value RV' may be a learning value corresponding to the type of the event Ev detected by the detection device 2.

The detection device 2 detects a decrease in the air pressure of each of the four tires TR mounted on the vehicle 1, by using both the DLR (Dynamic Loaded Radius) method and the RFM method (Resonance Frequency Method). That is, the detection device 2 detects a decrease in the air pressure of each tire TR based on the rotation speed of each of the left front wheel FL, the right front wheel FR, the left rear wheel RL, and the right rear wheel RR, and in the example shown in FIG. 1, the detection device 2 detects a decrease in the air pressure of each tire TR based on the rotation speeds of the tires TR1, TR2, TR3, and TR4.

In the vehicle 1 illustrated in FIG. 1, the wheel speed sensors 6 are attached to the left front wheel FL, the right front wheel FR, the left rear wheel RL, and the right rear wheel RR, respectively. While the vehicle 1 is traveling, each wheel speed sensor 6 detects a rotation speed signal S (wheel speed signal) at a predetermined sampling interval as information indicating the rotation speed of the wheel to which the wheel speed sensor 6 is attached. The rotation speed signal S detected by each wheel speed sensor 6 is a signal that represents the rotation speed (wheel speed) of each tire TR. The rotation speed signal S of each tire TR sensed moment by moment by each wheel speed sensor 6 is transmitted to the detection device 2 via the communication line 5, for example, in real time. In the example shown in FIG. 1, the wheel speed sensor 6 attached to the left front wheel FL detects a rotation speed signal S1 as a rotation speed signal S that represents the rotation speed of the tire TR1, and the wheel speed sensor 6 attached to the right front wheel FR detects a rotation speed signal S2 as a rotation speed signal S that represents the rotation speed of the tire TR2. Similarly, the wheel speed sensor 6 attached to the left rear wheel RL detects a rotation speed signal S3 as a rotation speed signal S that represents the rotation speed of the tire TR3, and the wheel speed sensor 6 attached to the right rear wheel RR detects a rotation speed signal S4 as a rotation speed signal S that represents the rotation speed of the tire TR4. In the present embodiment, when it is not necessary to particularly distinguish each of the rotation speed signal S1, the rotation speed signal S2, the rotation speed signal S3, and the rotation speed signal S4, these signals are sometimes simply referred to as "rotation speed signal S". Each wheel speed sensor 6 is connected to the detection device 2 via the communication line 5 or wirelessly. The rotation speed signal S detected by each wheel speed sensor 6 is sequentially transmitted to the detection device 2.

Each wheel speed sensor 6 is not particularly limited as long as the wheel speed sensor 6 can detect the rotation speed of the tire TR. For example, the wheel speed sensor 6 may be a sensor of a type that measures a rotation speed from an output signal of an electromagnetic pickup. Alternatively, the wheel speed sensor 6 may be a sensor of a type that generates electricity by using rotation, like a dynamo, and measures a rotation speed from the voltage of the generated electricity. The attachment position of the wheel speed sensor 6 is also not particularly limited and can be appropriately selected according to the type of sensor as long as the wheel speed sensor 6 can detect the rotation speed of the tire TR.

The display unit 3 is a display (display device) whose display is controlled by the detection device 2, and is, for example, an in-vehicle HMI (Human Machine Interface). The display unit 3 only needs to be a device capable of notifying the occupant of the vehicle 1 (e.g., the driver of the vehicle 1) of a decrease in the air pressure of a tire TR and a determination result that at least one of the above five types of events Ev has been performed. The display unit 3 can be implemented in any form, such as a liquid crystal display element, a liquid crystal monitor, a plasma display, or an organic EL (Electro-Luminescence) display. The mounting position of the display unit 3 can also be selected as appropriate, but it is preferable to install the display unit 3, for example, at a position where the occupant of the vehicle 1 can easily check the displayed content, such as on an instrument panel. When the detection device 2 is connected to a car navigation system, a monitor for car navigation may also be used as the display unit 3. Notifications such as a decrease in the air pressure of a tire TR and a determination result that at least one of the above five types of events Ev has been performed can be outputted on the display unit 3 in the form of icons, text information, etc. Such notifications may also be outputted via speakers installed in the vehicle 1 in the form of voice, warning sounds, etc.

### (Deflation determination values used for detecting tire air pressure decrease by DLR method)

As described above, the detection device 2 detects a decrease in the air pressure of each of the four tires TR mounted on the vehicle 1, by using both the DLR method and the RFM method. The detection device 2 according to the present embodiment can determine a decrease in tire air pressure for each tire TR by the DLR method using a first deflation determination value DEL1, a second deflation determination value DEL2, and a third deflation determination value DEL3. The first deflation determination value DEL1 is an example of a "first deflation determination value" of the present invention. In addition, the third deflation determination value DEL3 is an example of a "third deflation determination value" of the present invention. In the present embodiment, when it is not necessary to particularly distinguish each of the first deflation determination value DEL1, the second deflation determination value DEL2, and the third deflation determination value DEL3, these values are sometimes simply referred to as "deflation determination value DEL".

Each of the first deflation determination value DEL1, the second deflation determination value DEL2, and the third deflation determination value DEL3 indicates the relationship between the rotation speeds of two tires TR among the four tires TR and the rotation speeds of the remaining two tires TR. The first deflation determination value DEL1 is a deflation determination value DEL indicating a comparison between the sum of the rotation speeds of a pair of tires TR located on a diagonal line and the sum of the rotation speeds of the other pair of tires TR located on a diagonal line among the four tires TR. The first deflation determination value DEL1 may be regarded as an index that compares the total or average rotation speeds of the pairs of tires TR positioned diagonally on the vehicle 1. The second deflation determination value DEL2 is a deflation determination value DEL indicating a comparison between the sum of the rotation speeds of the two tires TR on the front wheel side and the sum of the rotation speeds of the two tires TR on the rear wheel side among the four tires TR. The second deflation determination value DEL2 may be regarded as an index that compares the total or average rotation speeds of the pairs of tires TR located at the front and rear of the vehicle 1. The third deflation determination value DEL3 is a deflation determination value DEL indicating a comparison between the sum of the rotation speeds of the two tires TR on the left side and the sum of the rotation speeds of the two tires TR on the right side among the four tires TR. The third deflation determination value DEL3 may be regarded as an index that compares the total or average rotation speeds of the pairs of tires TR located on the left and right sides of the vehicle 1. The first deflation determination value DEL1 may be regarded as an index value that increases as the wheel speeds of the two wheels on one diagonal line become larger and decreases as the wheel speeds of the two wheels on another diagonal line become larger among the four tires (in other words, the four wheels). In addition, the third deflation determination value DEL3 may be regarded as an index value that increases as the wheel speeds of the two wheels on the left side or the right side among the four wheels become larger and decreases as the wheel speeds of the remaining two wheels become larger. In contrast, the second deflation determination value DEL2 may be regarded as an index value that increases as the wheel speeds of the two wheels at the front wheels or the rear wheels among the four wheels become larger and decreases as the wheel speeds of the remaining two wheels become larger.

The detection device 2 calculates the above first deflation determination value DEL1, second deflation determination value DEL2, and third deflation determination value DEL3 from the rotation speed signal S of each wheel (each tire TR) obtained from each wheel speed sensor 6. For example, the detection device 2 calculates each of the first deflation determination value DEL1, the second deflation determination value DEL2, and the third deflation determination value DEL3, by using the rotation speed of the left front wheel FL (tire TR1) indicated by the rotation speed signal S1, the rotation speed of the right front wheel FR (tire TR2) indicated by the rotation speed signal S2, the rotation speed of the left rear wheel RL (tire TR3) indicated by the rotation speed signal S3, and the rotation speed of the right rear wheel RR (tire TR4) indicated by the rotation speed signal S4.

### (Resonance frequencies used for detecting tire air pressure decreases by RFM method)

The detection device 2 can determine a decrease in tire air pressure for each tire TR by the RFM method using a resonance frequency RF of each of the left and right wheel tires TR on the same axle among the four tires TR (e.g., the torsional resonance frequency of the tire TR). The detection device 2 according to the present embodiment determines a decrease in tire air pressure by using a resonance frequency RF(1) which is the resonance frequency RF of the left front wheel FL (tire TR1) and a resonance frequency RF(2) which is the resonance frequency RF of the right front wheel FR (tire TR2). The detection device 2 may determine a decrease in tire air pressure by using a resonance frequency RF(3) which is the resonance frequency RF of the left rear wheel RL (tire TR3) and a resonance frequency RF(4) which is the resonance frequency RF of the right rear wheel RR (tire TR4), instead of the resonance frequency RF(1) and the resonance frequency RF(2). Each of the resonance frequency RF(1) and the resonance frequency RF(2) (or the resonance frequency RF(3) and the resonance frequency RF(4)) is an example of a "resonance frequency" of the present invention. In the present embodiment, when it is not necessary to particularly distinguish each of the resonance frequencies RF(1), RF(2), RF(3), and RF(4), these resonance frequencies are sometimes simply referred to as "resonance frequency RF".

In the present embodiment, the detection device 2 calculates the resonance frequency RF from the rotation speed signal S of the wheel (tire TR) obtained from the wheel speed sensor 6. For example, the detection device 2 may calculate the resonance frequency RF by performing frequency analysis based on the rotation speed signal S. As one example, the detection device 2 may differentiate the rotation speed signal S1 to calculate the acceleration of the left front wheel FL (tire TR1), apply a fast Fourier transform (FFT) or the like to the calculated acceleration to derive the power spectrum of the acceleration, and estimate the resonance frequency RF(1). Similarly, the detection device 2 may estimate the resonance frequency RF(2) from the rotation speed signal S2. Since the power spectrum of the acceleration based on the acceleration calculated by differentiating the rotation speed signal S contains various types of noise, the detection device 2 may calculate the resonance frequency RF from the rotation speed signal S by averaging a predetermined number of calculation results (e.g., resonance frequencies RF calculated from the rotation speed signal S at each time point T). Furthermore, the method by which the detection device 2 calculates the resonance frequency RF from the rotation speed signal S is not limited to the above example. For example, the detection device 2 may calculate the resonance frequency RF from the rotation speed signal S by using a method in which the rotation speed signal S (wheel speed signal) obtained as time-series data is subjected to time-series analysis based on a K-order autoregressive (AR) model. The detection device 2 may also calculate the resonance frequency RF from the rotation speed signal S by using a band-pass filter (at least one of a fixed band-pass filter and a non-fixed band-pass filter).

### (Detection of tire air pressure decrease)

The detection device 2 can detect a decrease in the air pressure of each of the four tires TR mounted on the vehicle 1, with high accuracy, by combining the DLR method using the first deflation determination value DEL1, the second deflation determination value DEL2, and the third deflation determination value DEL3 and the RFM method using the resonance frequencies RF(1) and RF(2). The detection device 2 according to the present embodiment uses, for example, the first deflation determination value DEL1, the second deflation determination value DEL2, and the third deflation determination value DEL3, and the resonance frequencies RF(1) and RF(2) at each time point T as determination values, and detects deflation of each tire TR by comparing each determination value with a reference value RV corresponding to each determination value. The reference value RV is set, for example, based on a determination value calculated in a state where all of the four tires TR are at the normal internal pressure (NP). In the present embodiment, a first deflation reference value RVD1 is preset as the reference value RV used for comparison with the first deflation determination value DEL1 to detect a decrease in air pressure by the DLR method. In addition, a second deflation reference value RVD2 is preset as the reference value RV used for comparison with the second deflation determination value DEL2 to detect a decrease in air pressure. Furthermore, a third deflation reference value RVD3 is preset as the reference value RV used for comparison with the third deflation determination value DEL3 to detect a decrease in air pressure. Similarly, a first frequency RVR1 is preset as the reference value RV used for comparison with the resonance frequency RF(1) to detect a decrease in air pressure by the RFM method. In addition, a second frequency RVR2 is preset as the reference value RV used for comparison with the resonance frequency RF(2) to detect a decrease in air pressure.

In order to detect a decrease in the air pressure of each tire TR with high accuracy, the detection device 2 may calculate a moving average of each determination value over a predetermined period (e.g., several seconds) for the determination value, and detect deflation by comparing the calculated moving average with the reference value RV corresponding to each determination value. For example, in order to calculate such a moving average, the time point T (determination time point DP) at which the detection device 2 detects a decrease in the air pressure of each tire TR may be a "time point T after the vehicle 1 has continued to travel for a predetermined time" from the start of traveling, or may be a "time point T after the vehicle 1 has traveled for a predetermined distance". Alternatively, the determination time point DP may be a "time point T after the vehicle 1 started traveling and at least a predetermined number of determination values calculated at each time point T from the rotation speed signal S of each tire TR of the traveling vehicle 1 have been accumulated".

### (Event detection)

In addition to detecting a decrease in the air pressure of each tire TR, the detection device 2 determines whether the first event Ev1 has been performed, that is, detects the first event Ev1. In particular, although details will be described later, the detection device 2 determines whether the first event Ev1 has been performed, by using the "first deflation determination value DEL1 and the first deflation reference value RVD1 for detecting a decrease in air pressure in the DLR method". By using the first deflation determination value DEL1 and the first deflation reference value RVD1, the detection device 2 can determine with high accuracy whether the first event Ev1, which is "replacement of only one wheel among the four tires TR with a new tire", has been performed. When determining whether the first event Ev1 has been performed, the detection device 2 may take into consideration a "stopped time ST from when the vehicle 1 stops until the vehicle 1 restarts traveling", in addition to the first deflation determination value DEL1 and the first deflation reference value RVD1. Since the first event Ev1 is performed during the stopped time ST, the detection device 2 can determine with even higher accuracy whether the first event Ev1 has been performed, by taking the stopped time ST into consideration in addition to the first deflation determination value DEL1 and the first deflation reference value RVD1.

The detection device 2 according to the present embodiment may detect each of the second event Ev2, the third event Ev3, the fourth event Ev4, and the fifth event Ev5 in addition to the first event Ev1. In particular, the detection device 2 may detect each of the second event Ev2, the third event Ev3, the fourth event Ev4, and the fifth event Ev5, by using at least one of the plurality of deflation determination values DEL, which are used for detecting a decrease in air pressure in the DLR method, and the respective resonance frequencies RF of the left and right wheel tires TR, which are used for detecting a decrease in air pressure in the RFM method. In addition, when detecting each of the second event Ev2, the third event Ev3, the fourth event Ev4, and the fifth event Ev5, the detection device 2 may take the stopped time ST into consideration. That is, the detection device 2 may detect each of the five types of events Ev including the first event Ev1 to the fifth event Ev5, by taking the stopped time ST into consideration.

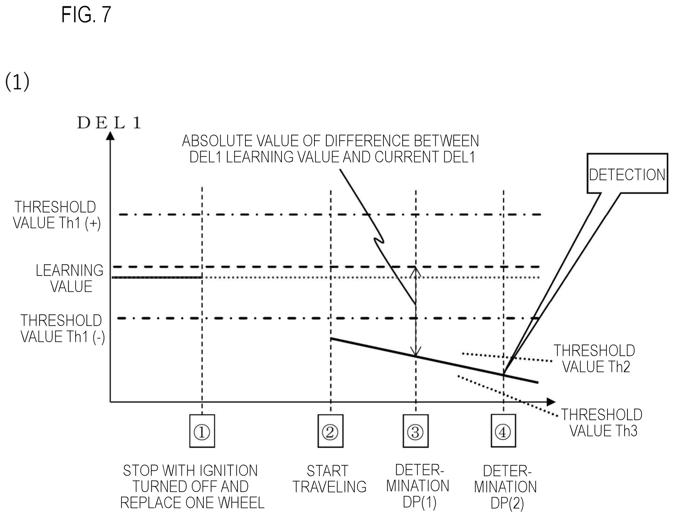

In the present embodiment, an example in which the detection device 2 determines whether at least one of the above five types of events Ev has been performed during the stopped time ST, which is a "time (period) from when the vehicle 1 stops until the vehicle 1 restarts traveling", will be described. Therefore, in the present embodiment, for example, a situation where "the vehicle 1 travels, stops, and restarts traveling after the stopped time ST has elapsed" is assumed. Accordingly, in the following description, a determination value calculated from the rotation speed signal S during a "period in which the vehicle 1 traveled before the stopped time ST" and a determination value calculated from the rotation speed signal S during a "period in which the vehicle 1 has restarted traveling after the stopped time ST" may be distinguished from each other. In particular, a "determination value calculated last" during the "period in which the vehicle 1 traveled immediately before the stopped time ST" and a determination value calculated from the rotation speed signal S during the "period in which the vehicle 1 has restarted traveling" are sometimes distinguished from each other. In the following description, a "determination value calculated last during traveling immediately before stopping" is sometimes referred to as "previous determination value VP", and a "determination value calculated during the period in which the vehicle 1 has restarted traveling" is sometimes referred to as "current determination value VC", thereby distinguishing both values from each other. The detection device 2 whose outline has been described above will be described in detail below with reference to FIG. 7 to FIG. 18.

### §2 Configuration Example

FIG. 7 is a block diagram showing an example of the electrical configuration of the detection device 2. The detection device 2 according to the present embodiment is, for example, a control unit (computer) installed in the vehicle 1, as hardware. The detection device 2 may be implemented by one or more ECUs (Electronic Control Units). The detection device 2 illustrated in FIG. 7 includes an I/O interface 11, a CPU (Central Processing Unit) 12, a ROM (Read Only Memory) 13, a RAM (Random Access Memory) 14, and a non-volatile rewritable storage device 15. The detection device 2 is configured to execute information processing based on programs and various data by using the CPU 12, which is a hardware processor, the ROM 13, the RAM 14, etc. The CPU 12 is an example of a processor resource. The storage device 15 is an example of a memory resource and is configured, for example, as a hard disk drive, a solid-state drive, or the like. The RAM 14 and the storage device 15 are used as appropriate for calculation by the CPU 12. The storage device 15 illustrated in FIG. 7 stores therein a determination value table 151 and a reference value table 152.

In the determination value table 151, each determination value (each of the first deflation determination value DEL1, the second deflation determination value DEL2, the third deflation determination value DEL3, and the resonance frequencies RF(1) and RF(2)) calculated at each time point T from the rotation speed signal S of each tire TR of the traveling vehicle 1, is stored. In particular, in the determination value table 151, each determination value at each of a plurality of time points T is stored. Specifically, in the determination value table 151, the previous determination value VP (determination value calculated last during traveling immediately before stopping) has already been stored as each determination value at the time point when the vehicle 1 restarts traveling.

In the present embodiment, in the determination value table 151, a previous first deflation determination value D1P, a previous second deflation determination value D2P, and a previous third deflation determination value D3P have already been stored as previous determination values VP at the time point when the vehicle 1 restarts traveling. The previous first deflation determination value D1P, the previous second deflation determination value D2P, and the previous third deflation determination value D3P are respectively the first deflation determination value DEL1, the second deflation determination value DEL2, and the third deflation determination value DEL3 calculated last during traveling immediately before stopping. Similarly, in the determination value table 151, previous resonance frequencies RFP(1) and RFP(2) have already been stored as previous determination values VP at the time point when the vehicle 1 restarts traveling. The previous resonance frequencies RFP(1) and RFP(2) are respectively the resonance frequencies RF(1) and RF(2) calculated last during traveling immediately before stopping. For the reasons described above, the above previous determination values VP may each be the "moving average of determination values calculated last during traveling immediately before stopping.

Also, when the vehicle 1 restarts traveling, a current determination value VC (determination value calculated during the period in which the vehicle 1 has restarted traveling) is newly stored as each determination value in the determination value table 151, in addition to the previous determination values VP. That is, when the vehicle 1 restarts traveling, a current first deflation determination value D1C, a current second deflation determination value D2C, and a current third deflation determination value D3C are stored as current determination values VC in the determination value table 151. The current first deflation determination value D1C, the current second deflation determination value D2C, and the current third deflation determination value D3C are respectively the first deflation determination value DEL1, the second deflation determination value DEL2, and the third deflation determination value DEL3 calculated during restarted traveling. Similarly, when the vehicle 1 restarts traveling, current resonance frequencies RFC(1) and RFC(2) are stored as current determination values VC in the determination value table 151. The current resonance frequencies RFC(1) and RFC(2) are respectively the resonance frequencies RF(1) and RF(2) calculated during restarted traveling.

In the determination value table 151, the reference value RV corresponding to each determination value is stored. In the present embodiment, the first deflation reference value RVD1, the second deflation reference value RVD2, the third deflation reference value RVD3, the first frequency RVR1, and the second frequency RVR2 are stored in advance in the determination value table 151.

In the storage device 15, a reference stopped time RT which is not shown may be stored in addition to the determination value table 151 and the reference value table 152. The reference stopped time RT is a time used for comparison with the "stopped time ST from when the vehicle 1 stops until the vehicle 1 restarts traveling". The reference stopped time RT may be set for each of the five types of events Ev including the first event Ev1 to the fifth event Ev5. For example, a first reference stopped time RT1 may set as the reference stopped time RT for the first event Ev1, a second reference stopped time RT2 may be set as the reference stopped time RT for the second event Ev2, a third reference stopped time RT3 may be set as the reference stopped time RT for the third event Ev3, a fourth reference stopped time RT4 may be set as the reference stopped time RT for the fourth event Ev4, and a fifth reference stopped time RT5 may be set as the reference stopped time RT for the fifth event Ev5. For each of the first reference stopped time RT1 to the fifth reference stopped time RT5, a length may be set in accordance with the corresponding event Ev. For example, the length of each of the first reference stopped time RT1 to the fifth reference stopped time RT5 may be set based on the "shortest time assumed as a time required by a typical driver to perform the corresponding event Ev". The length of each of the first reference stopped time RT1 to the fifth reference stopped time RT5 may be set such that the second reference stopped time RT2, the fourth reference stopped time RT4, the first reference stopped time RT1, the third reference stopped time RT3, and the fifth reference stopped time RT5 are arranged in ascending order starting from the shortest. However, it is not essential that the lengths of the first reference stopped time RT1 to the fifth reference stopped time RT5 have the above relationship, and, for example, the length of the third reference stopped time RT3 and the length of the fifth reference stopped time RT5 may be equal to each other. When the reference stopped time RT is set for each of the five types of events Ev including the first event Ev1 to the fifth event Ev5, the detection device 2 can achieve the following effect: namely, by using the reference stopped time RT set for each event Ev, the detection device 2 can determine with high accuracy whether the event Ev corresponding to the reference stopped time RT has been performed during the stopped time ST.

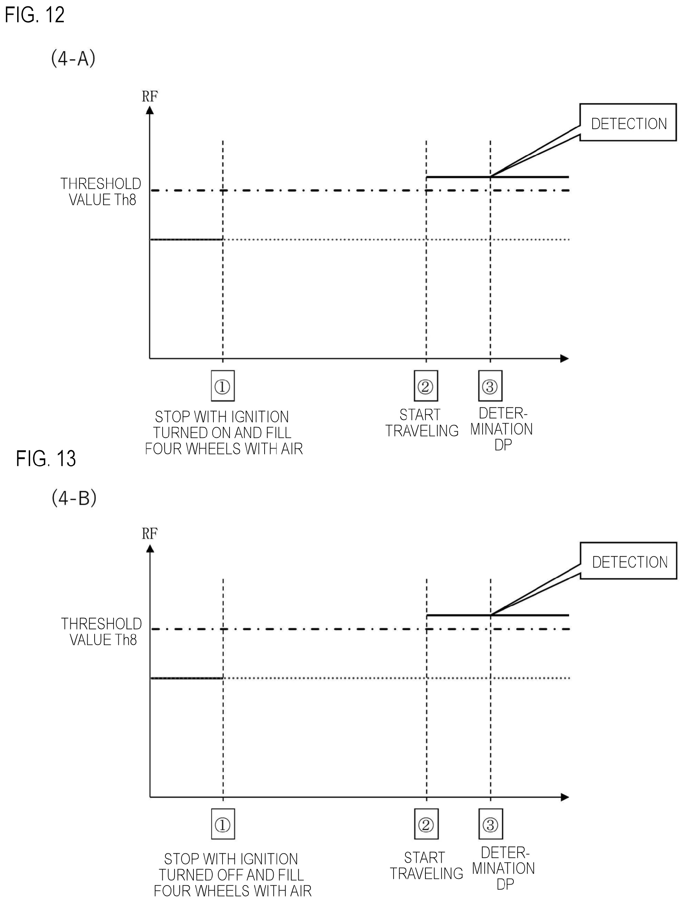

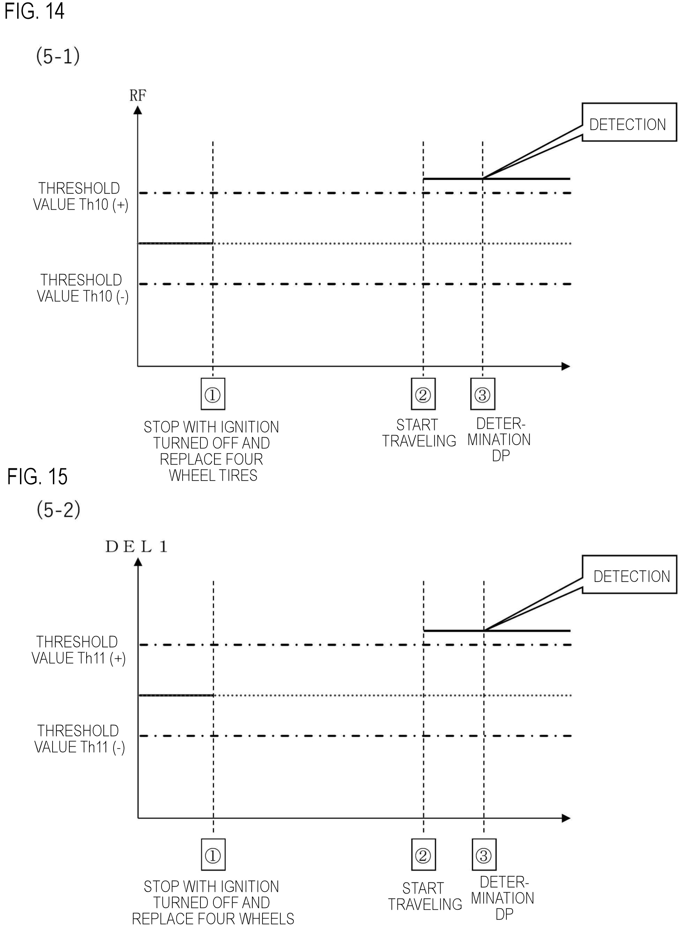

The I/O interface 11 is a communication device that enables communication with external devices such as the display unit 3 and the wheel speed sensors 6. A program 7 is stored in the ROM 13. However, the program 7 may be stored in the storage device 15 instead of the ROM 13. The program 7 is a program for causing the detection device 2 to execute information processing described later (FIG. 13, FIG. 14) for "determining whether the first event Ev1 has been performed". The program 7 according to the present embodiment may cause the detection device 2 to execute information processing (FIG. 15 to FIG. 18) for determining "whether any of the second event Ev2, the third event Ev3, the fourth event Ev4, and the fifth event Ev5 has been performed" in addition to "whether the first event Ev1 has been performed". The program 7 includes a series of instructions for the information processing. A storage medium 8 is a medium that stores information such as this program by electrical, magnetic, optical, mechanical, or chemical action such that a computer, another device, a machine, etc., can read the stored information such as the program. The above program 7 may be stored in the storage medium 8. The detection device 2 may acquire the program 7 from the storage medium 8. The storage medium 8 may be a disk-type storage medium such as a CD or DVD, or may be a non-disk-type storage medium. Examples of non-disk-type storage media include semiconductor memories such as a flash memory.

In the present embodiment, the CPU 12 loads the program 7 stored in the ROM 13, into the RAM 14. Then, the CPU 12 interprets and executes the instructions included in the program 7 loaded in the RAM 14 to control each component. Accordingly, as shown in FIG. 7, the detection device 2 according to the present embodiment operates as a computer that includes, as software modules, an acquisition unit 20, a stop determination unit 21, a calculation unit 22, and an event determination unit 23. That is, in the present embodiment, each software module of the detection device 2 is implemented by a hardware configuration such as the CPU 12.

The acquisition unit 20 acquires the rotation speed signal S indicating the rotation speed of each of the four tires TR included in the vehicle 1. In the present embodiment, the acquisition unit 20 acquires the rotation speed signal S1, which represents the rotation speed of the left front wheel FL, from the wheel speed sensor 6 attached to the left front wheel FL, and acquires the rotation speed signal S2, which represents the rotation speed of the right front wheel FR, from the wheel speed sensor 6 attached to the right front wheel FR. Similarly, the acquisition unit 20 acquires the rotation speed signal S3, which represents the rotation speed of the left rear wheel RL, from the wheel speed sensor 6 attached to the left rear wheel RL, and acquires the rotation speed signal S4, which represents the rotation speed of the right rear wheel RR, from the wheel speed sensor 6 attached to the right rear wheel RR.

The stop determination unit 21 determines whether the stopped time ST is equal to or longer than the reference stopped time RT. As described above, in the present embodiment, the reference stopped time RT may be set for each event Ev, and the stop determination unit 21 may compare the stopped time ST with each of the first reference stopped time RT1, the second reference stopped time RT2, the third reference stopped time RT3, the fourth reference stopped time RT4, and the fifth reference stopped time RT5. It is not essential that the detection device 2 includes the stop determination unit 21. That is, it is not essential that the detection device 2 detects each event Ev (in other words, determines whether at least one of the above five types of events Ev has been performed) by taking the stopped time ST into consideration. However, as described above, by taking the stopped time ST into consideration, the detection device 2 can detect each event Ev with higher accuracy than when not taking the stopped time ST into consideration.

The calculation unit 22 calculates each determination value from the rotation speed signal S of each tire TR acquired by the acquisition unit 20. For example, at each time point T, the calculation unit 22 calculates each of the plurality of deflation determination values DEL and the resonance frequencies RF(1) and RF(2) from the rotation speed signal S of each tire TR. Then, the calculation unit 22 stores each calculated determination value into the determination value table 151. In the example shown in FIG. 7, the calculation unit 22 includes a first calculation unit 221 and a second calculation unit 222.

The first calculation unit 221 calculates the plurality of deflation determination values DEL, each of which is used in the DLR method to detect a decrease in air pressure and indicates the relationship between the rotation speeds of two tires TR among the four tires TR and the rotation speeds of the remaining two tires TR. In the present embodiment, the first calculation unit 221 calculates each of the first deflation determination value DEL1, the second deflation determination value DEL2, and the third deflation determination value DEL3 by using the rotation speed signal S1, the rotation speed signal S2, the rotation speed signal S3, and the rotation speed signal S4.

The second calculation unit 222 calculates the resonance frequency RF of each of the left and right wheel tires TR on the same axle among the four tires TR, which is used in the RFM method to detect a decrease in air pressure. In the present embodiment, the second calculation unit 222 calculates the resonance frequency RF(1) of the left front wheel FL from the rotation speed signal S1 and the resonance frequency RF(2) of the right front wheel FR from the rotation speed signal S2.

The event determination unit 23 detects each of the five types of events Ev including the first event Ev1 to the fifth event Ev5, that is, determines whether any of the five types of events Ev has been performed. If the stop determination unit 21 determines that "the stopped time ST is equal to or longer than the reference stopped time RT", the event determination unit 23 according to the present embodiment determines whether any of the above five types of events Ev has been performed during the stopped time ST. In particular, the event determination unit 23 determines whether at least one of the five types of events Ev has been performed during the stopped time ST, by using at least one of the first deflation determination value DEL1, the second deflation determination value DEL2, the third deflation determination value DEL3, and the resonance frequencies RF(1) and RF(2) which are calculated by the calculation unit 22. In the example shown in FIG. 7, the event determination unit 23 includes a first event determination unit 231, a second event determination unit 232, a third event determination unit 233, a fourth event determination unit 234, and a fifth event determination unit 235.

As described above, at the determination time point DP which is the time point T after the vehicle 1 has traveled for a predetermined time (or a predetermined distance) from restart of traveling, the detection device 2 detects a decrease in the air pressure of each tire TR, in other words, the detection device 2 determines a decrease in air pressure for each tire TR. Therefore, in the present embodiment, an example in which the event determination unit 23 determines at the determination time point DP "whether at least one of the five types of events Ev has been performed during the stopped time ST", will be described. As described above, the determination time point DP may be a time point T after the vehicle 1 restarted traveling and at least a predetermined number of determination values calculated at each time point T from the rotation speed signal S of each tire TR of the traveling vehicle 1 have been accumulated. Alternatively, the determination time point DP may be, for example, a timing when each determination value calculated at each time point T has become stabilized (or assumed to have become stabilized). Whether each determination value has become stabilized may be determined, for example, based on the variation of each determination value calculated at each time point T. The determination time point DP may be a parameter that can be set as desired.

### (Detection of first event)

The first event determination unit 231 determines whether the first event Ev1 has been performed during the stopped time ST. In the present embodiment, if the stop determination unit 21 determines that "the stopped time ST is equal to or longer than the first reference stopped time RT1", the first event determination unit 231 may determine whether the first event Ev1 has been performed during the stopped time ST. The first event determination unit 231 determines whether the first event Ev1 has been performed during the stopped time ST, by using the first deflation determination value DEL1 and the first deflation reference value RVD1.

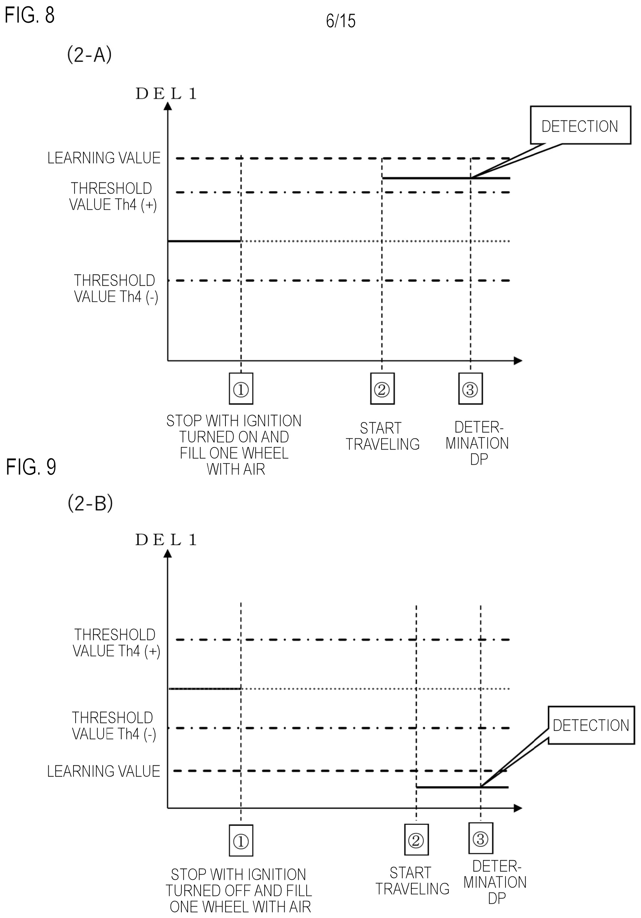

FIG. 8 illustrates an image of a case where the first event determination unit 231 detects the first event Ev1. Specifically, (1) of FIG. 8 illustrates changes in the first deflation determination value DEL1, etc., in the case where "the first event Ev1 is performed when the driver stops the vehicle 1 with the ignition turned OFF".

The first event determination unit 231 calculates the absolute value of the difference between the first deflation reference value RVD1 and the current first deflation determination value D1C (first deflation determination value DEL1 calculated during restarted traveling). In addition, the first event determination unit 231 calculates the slope of the regression line of the current first deflation determination value D1C with respect to the traveling time during restarted traveling.

As illustrated in FIG. 8, the first event determination unit 231 may calculate the above "slope of the regression line of the current first deflation determination value D1C with respect to the traveling time during restarted traveling" as a value obtained by dividing the difference between the current first deflation determination value D1C at a start time point (determination time point DP(1)) and the current first deflation determination value D1C at an end time point (determination time point DP(2)) in a predetermined period during the current trip by the predetermined period (the time interval between the determination time point DP(1) and the determination time point DP(2)). In the present embodiment, a "trip" refers to a "period from when an ignition key (start switch) is pressed, that is, the ignition is turned ON, and the vehicle 1 starts operating until the ignition key is pressed, that is, the ignition is turned OFF, and the vehicle 1 stops operating".

Alternatively, the first event determination unit 231 may calculate the "slope of the regression line of the current first deflation determination value D1C with respect to the traveling time during restarted traveling" from the first deflation determination value DEL1 at each time point T after the vehicle 1 restarted traveling, by using an "algorithm that can remove noise from time-series data and accurately estimate a state" such as a Kalman filter. For example, the first event determination unit 231 may calculate the "slope of the regression line of the current first deflation determination value D1C with respect to the traveling time during restarted traveling" at the determination time point DP(2) by applying a Kalman filter to the first deflation determination value DEL1 (current first deflation determination value D1C) at each time point T from the determination time point DP(1) to the determination time point DP(2).

The first event determination unit 231 determines that the first event Ev1 has been performed during the stopped time ST, if both of the following conditions are satisfied: "the absolute value of the difference between the first deflation reference value RVD1 and the current first deflation determination value D1C is equal to or greater than a predetermined first threshold value Th1" and "the slope of the regression line of the current first deflation determination value D1C with respect to the traveling time during restarted traveling is equal to or greater than a predetermined second threshold value Th2 and equal to or less than a predetermined third threshold value Th3".

The above determination time point DP(1) is an example of the determination time point DP described thus far, and may be, for example, a time point T after the vehicle 1 restarted traveling and at least a predetermined number of determination values calculated at each time point T from the rotation speed signal S of each tire TR of the traveling vehicle 1 have been accumulated. For example, the determination time point DP(1) may be a timing when the first deflation determination value DEL1 (current first deflation determination value D1C) calculated at each time point T after the vehicle 1 restarted traveling has become stabilized (or assumed to have become stabilized). In addition, the determination time point DP(2) is a time point T later than the determination time point DP(1) and is a time point T after the "time point when the quantity of data required to calculate the 'slope of the regression line of the current first deflation determination value D1C with respect to the traveling time during restarted traveling' has been accumulated". The determination time point DP(2) is, for example, the time point when the number of first deflation determination values DEL1 (current first deflation determination values D1C) calculated at each time point T after the vehicle 1 restarted traveling, which is required to calculate the above slope, has been accumulated.

In the present embodiment, the first event determination unit 231 may determine at the determination time point DP(1) "whether the absolute value of the difference between the first deflation reference value RVD1 and the current first deflation determination value D1C is equal to or greater than the first threshold value Th1". If the first event determination unit 231 determines at the determination time point DP(1) that "the absolute value of the difference between the first deflation reference value RVD1 and the current first deflation determination value D1C is less than the first threshold value Th1", the first event determination unit 231 does not have to calculate the "slope of the regression line of the current first deflation determination value D1C with respect to the traveling time during restarted traveling" at the determination time point DP(2). That is, only when the first event determination unit 231 determines at the determination time point DP(1) that "the absolute value of the difference between the first deflation reference value RVD1 and the current first deflation determination value D1C is equal to or greater than the first threshold value Th1", the first event determination unit 231 may determine at the determination time point DP(2) "whether the slope of the regression line of the current first deflation determination value D1C with respect to the traveling time during restarted traveling is equal to or greater than the second threshold value Th2 and equal to or less than the third threshold value Th3".

When the first event Ev1 is performed and only one wheel among the four tires TR is replaced with a new tire, the outer diameter of the new tire is increased due to a phenomenon of tire growth, causing the air pressure of the new tire to rise. In the example shown in FIG. 4, the outer diameter of the tire TR1', which is a new tire, is increased due to tire growth, causing the air pressure thereof to rise. Therefore, by using the first deflation determination value DEL1, the first event determination unit 231 detects the rise in the air pressure of the new tire, that is, determines whether the first event Ev1 has been performed during the stopped time ST.

Here, as described above, the first event determination unit 231 determines "whether the absolute value of the difference between the first deflation reference value RVD1 and the current first deflation determination value D1C is equal to or greater than the first threshold value Th1". If the previous first deflation determination value D1P is used in this determination instead of the first deflation reference value RVD1, the following problem may arise. Specifically, if the ignition of the vehicle 1 is turned OFF between the determination time point DP(1) and the determination time point DP(2), the previous first deflation determination value D1P is updated. Therefore, in a subsequent trip, the condition that "the absolute value of the difference between the previous first deflation determination value D1P and the current first deflation determination value D1C is equal to or greater than the first threshold value Th1" is not satisfied, and thus, the first event determination unit 231 cannot detect the first event Ev1 performed before the determination time point DP(1). To prevent this situation, the first event determination unit 231 determines "whether the absolute value of the difference between the first deflation reference value RVD1 and the current first deflation determination value D1C is equal to or greater than the first threshold value Th1" by using the first deflation reference value RVD1 instead of the previous first deflation determination value D1P.

Moreover, by determining "whether the absolute value of the difference between the first deflation reference value RVD1 and the current first deflation determination value D1C is equal to or greater than the first threshold value Th1", the first event determination unit 231 can avoid, for example, the following situation. Specifically, by performing the above determination, the first event determination unit 231 can avoid a situation where "after the first event determination unit 231 detects the first event Ev1 and notifies the occupant with a reset recommendation message, and the reference value RV (learning value) is reset, when the vehicle 1 travels again, the first event determination unit 231 detects the first event Ev1 again".

The first threshold value Th1 may be set for each tire TR and may be set, for example, as a parameter calculated from the "amount of change in the first deflation determination value DEL1 with respect to a different amount of deflation" for each tire TR. As one example, the first threshold value Th1 for each tire TR may be set as the "amount of change in the first deflation determination value DEL1 corresponding to 10% deflation", which is calculated for each tire TR (particularly, calculated also considering the "detection of a decrease in air pressure" for each tire TR). The second threshold value Th2 can be set as a parameter with which it is possible to distinguish between before and after "replacement of only one wheel with a new tire" is performed, based on the "slope of the regression line of the first deflation determination value DEL1 with respect to the traveling time when tire growth of a new tire occurs" and the "slope of the regression line of the first deflation determination value DEL1 with respect to the traveling time when tire growth has occurred at the four wheels". The third threshold value Th3 can be set as a parameter with which it is possible to distinguish between "replacement of only one wheel with a new tire" and "air pressure reduction occurring in one wheel", based on the "slope of the regression line of the first deflation determination value DEL1 with respect to the traveling time when tire growth of a new tire occurs" and the "slope of the regression line of the first deflation determination value DEL1 with respect to the traveling time when air pressure reduction (e.g., a puncture) occurs in one tire".

### (Detection of second event)

The second event determination unit 232 determines whether the second event Ev2 has been performed during the stopped time ST. In the present embodiment, if the stop determination unit 21 determines that "the stopped time ST is equal to or longer than the second reference stopped time RT2", the second event determination unit 232 may determine whether the second event Ev2 has been performed during the stopped time ST. The second event determination unit 232 determines whether the second event Ev2 has been performed during the stopped time ST, by using the first deflation determination value DEL1 and the first deflation reference value RVD1.

FIG. 9 illustrates an image of a case where the second event determination unit 232 detects the second event Ev2. Specifically, (2-A) of FIG. 9 illustrates changes in the first deflation determination value DEL1, etc., in the case where "the second event Ev2 is performed when the driver of the vehicle 1 stops the vehicle 1 with the ignition turned ON". In addition, (2-B) of FIG. 9 illustrates changes in the first deflation determination value DEL1, etc., in the case where "the second event Ev2 is performed when the driver stops the vehicle 1 with the ignition turned OFF".

The second event determination unit 232 calculates the absolute value of the difference between the previous first deflation determination value D1P (first deflation determination value DEL1 calculated last during traveling immediately before stopping) and the current first deflation determination value D1C. In addition, the second event determination unit 232 calculates the "absolute value of the difference between the first deflation reference value RVD1 and the previous first deflation determination value D1P" and the "absolute value of the difference between the first deflation reference value RVD1 and the current first deflation determination value D1C" and compares both values. Then, the second event determination unit 232 determines that the second event Ev2 has been performed during the stopped time ST, if both of the following conditions are satisfied: "the absolute value of the difference between the previous first deflation determination value D1P and the current first deflation determination value D1C is equal to or greater than a predetermined fourth threshold value Th4" and "the 'absolute value of the difference between the first deflation reference value RVD 1 and the current first deflation determination value D1C' is smaller than the 'absolute value of the difference between the first deflation reference value RVD1 and the previous first deflation determination value D1P‴.

As illustrated in FIG. 9, the second event determination unit 232 may distinguish between the case where "the second event Ev2 is performed while the driver keeps the ignition of the vehicle 1 ON" and the case where "the driver turns the ignition of the vehicle 1 OFF and the second event Ev2 is performed". The second event determination unit 232 may detect that "the driver has turned the ignition of the vehicle 1 OFF and the second event Ev2 has been performed" as follows. Specifically, when the ignition is turned OFF and then turned ON after the stopped time ST equal to or longer than the reference stopped time RT (particularly, the second reference stopped time RT2) has elapsed, the "previous first deflation determination value D1P" may be the first deflation determination value DEL1 calculated last during the previous IG cycle (previous trip). Similarly, the "current first deflation determination value D1C" may be the first deflation determination value DEL1 calculated during the current trip.

When the second event Ev2 (air filling of only one wheel) is performed in a state where deflation (air pressure decrease) has occurred in one wheel among the four tires TR, the first deflation determination value DEL1 changes toward the first deflation reference value RVD1 (learning value) before and after the second event Ev2 is performed. Therefore, the second event determination unit 232 determines whether the second event Ev2 has been performed during the stopped time ST, by using this change in the first deflation determination value DEL1. The fourth threshold value Th4 may be set for each tire TR and may be set, for example, as a parameter calculated from the "amount of change in the first deflation determination value DEL1 with respect to a different amount of deflation" for each tire TR. As one example, the fourth threshold value Th4 for each tire TR may be set as the "amount of change in the first deflation determination value DEL1 corresponding to 10% deflation", which is calculated for each tire TR (particularly, calculated also considering the "detection of a decrease in air pressure" for each tire TR).

The second reference stopped time RT2 may be set, for example, based on the "shortest time required by a typical driver to perform the second event Ev2 (air filling of only one wheel)" and as one example, the second reference stopped time RT2 may be set to approximately "60 seconds". However, the second reference stopped time RT2 may be set to be shorter than the above shortest time in order to increase the chances of detecting the second event Ev2. Alternatively, for example, considering a situation where automatic pressure adjustment devices are not widely used, the second reference stopped time RT2 may be set to be longer than the above shortest time.

### (Detection of third event)

The third event determination unit 233 determines whether the third event Ev3 has been performed during the stopped time ST. In the present embodiment, if the stop determination unit 21 determines that "the stopped time ST is equal to or longer than the third reference stopped time RT3", the third event determination unit 233 may determine whether the third event Ev3 has been performed during the stopped time ST. The third event determination unit 233 determines whether the third event Ev3 has been performed during the stopped time ST, by using the first deflation determination value DEL1 and the third deflation determination value DEL3.

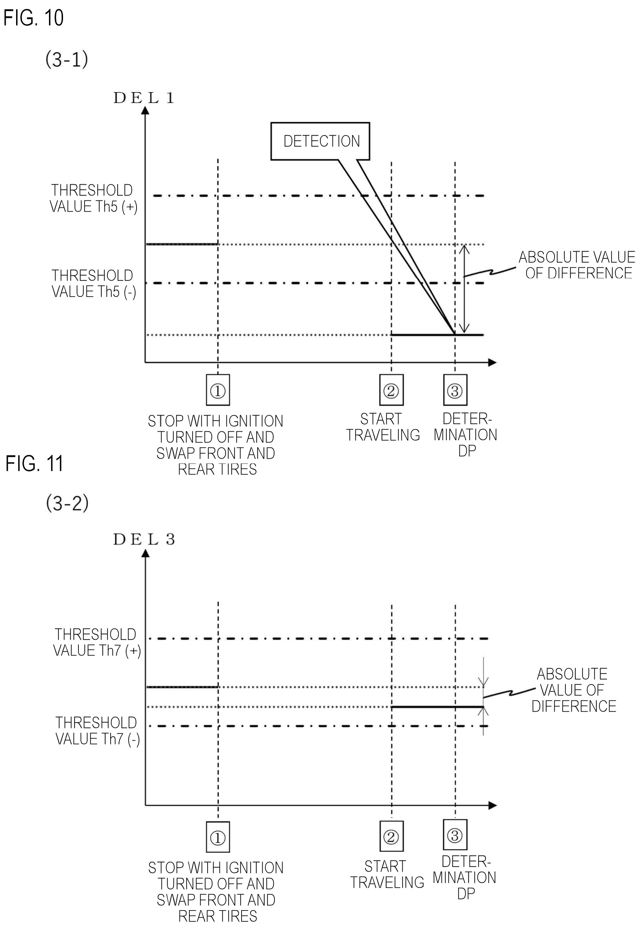

FIG. 10 illustrates an image of a case where the third event determination unit 233 detects the third event Ev3. Specifically, (3-1) of FIG. 10 illustrates changes in the first deflation determination value DEL1, etc., in the case where "the third event Ev3 is performed when the driver stops the vehicle 1 with the ignition turned OFF". In addition, (3-2) of FIG. 10 illustrates changes in the third deflation determination value DEL3, etc., in the case where "the third event Ev3 is performed when the driver stops the vehicle 1 with the ignition turned OFF".

The third event determination unit 233 calculates the absolute value of the difference between the previous first deflation determination value D1P and the current first deflation determination value D1C. In addition, the third event determination unit 233 determines whether the sign of the previous first deflation determination value D1P is different from the sign of the current first deflation determination value D1C. Furthermore, the third event determination unit 233 calculates the absolute value of the difference between the absolute value of the previous first deflation determination value D1P and the absolute value of the current first deflation determination value D1C. Moreover, the third event determination unit 233 calculates the absolute value of the difference between the previous third deflation determination value D3P (third deflation determination value DEL3 calculated last during traveling immediately before stopping) and the current third deflation determination value D3C (third deflation determination value DEL3 calculated during restarted traveling). Then, the third event determination unit 233 determines that the third event Ev3 has been performed during the stopped time ST, if all of the following conditions are satisfied: "the absolute value of the difference between the previous first deflation determination value D1P and the current first deflation determination value D1C is equal to or greater than a predetermined fifth threshold value Th5", "the sign of the previous first deflation determination value D1P is different from the sign of the current first deflation determination value D1C", "the absolute value of the difference between the absolute value of the previous first deflation determination value D1P and the absolute value of the current first deflation determination value D1C is equal to or less than a predetermined sixth threshold value Th6", and "the absolute value of the difference between the previous third deflation determination value D3P and the current third deflation determination value D3C is equal to or less than a predetermined seventh threshold value Th7".

When the front and rear tires TR of the vehicle 1 are swapped (i.e., the third event Ev3 is performed), the sign of the first deflation determination value DEL1 is reversed, but the absolute value of the first deflation determination value DEL1 remains approximately the same before and after the third event Ev3 is performed. In addition, when the third event Ev3 is performed, the change in the third deflation determination value DEL3 becomes smaller. Therefore, the third event determination unit 233 determines whether the third event Ev3 has been performed during the stopped time ST, by using the changes in the first deflation determination value DEL1 and the third deflation determination value DEL3. In particular, by determining "whether the absolute value of the difference between the previous third deflation determination value D3P and the current third deflation determination value D3C is equal to or less than the seventh threshold value Th7", the third event determination unit 233 can detect the third event Ev3 while distinguishing the third event Ev3 from a decrease in the air pressure of each tire TR. By determining "whether the absolute value of the difference between the previous third deflation determination value D3P and the current third deflation determination value D3C is equal to or less than the seventh threshold value Th7", the third event determination unit 233 can detect the third event Ev3 while avoiding false detection of "a decrease in the air pressure of a tire TR". Moreover, by determining "whether the absolute value of the difference between the absolute value of the previous first deflation determination value D1P and the absolute value of the current first deflation determination value D1C is equal to or less than the sixth threshold value Th6", the third event determination unit 233 can determine with high accuracy "whether the third event Ev3 has been performed during the stopped time ST", in consideration of the variation of the first deflation determination value DEL1 at each time point T.

The fifth threshold value Th5 may be set for each tire TR and may be set, for example, as a parameter calculated from the "amount of change in the first deflation determination value DEL1 with respect to a different amount of deflation" for each tire TR. As one example, the fifth threshold value Th5 for each tire TR may be set as the "amount of change in the first deflation determination value DEL1 corresponding to 10% deflation", which is calculated for each tire TR (particularly, calculated also considering the "detection of a decrease in air pressure" for each tire TR). Similarly, the seventh threshold value Th7 may also be set for each tire TR and may be set, for example, as a parameter calculated from the "amount of change in the third deflation determination value DEL3 with respect to a different amount of deflation" for each tire TR. As one example, the seventh threshold value Th7 for each tire TR may be set as the "amount of change in the third deflation determination value DEL3 corresponding to 10% deflation", which is calculated for each tire TR (particularly, calculated also considering the "detection of a decrease in air pressure" for each tire TR). The sixth threshold value Th6 may be set based on the variation of the first deflation determination value DEL1 at each time point T. For example, the "variation of the first deflation determination value DEL1" may be calculated from accumulated data regarding the first deflation determination value DEL1 at each time point T, and the sixth threshold value Th6 may be set as a parameter based on the calculated "variation of the first deflation determination value DEL1".

### (Detection of fourth event)

The fourth event determination unit 234 determines whether the fourth event Ev4 has been performed during the stopped time ST. In the present embodiment, if the stop determination unit 21 determines that "the stopped time ST is equal to or longer than the fourth reference stopped time RT4", the fourth event determination unit 234 may determine whether the fourth event Ev4 has been performed during the stopped time ST. The fourth event determination unit 234 determines whether the fourth event Ev4 has been performed during the stopped time ST, by using the resonance frequencies RF(1) and RF(2).

FIG. 11 illustrates an image of a case where the fourth event determination unit 234 detects the fourth event Ev4. Specifically, (4-A) of FIG. 11 illustrates changes in the resonance frequency RF, etc., in the case where "the fourth event Ev4 is performed when the driver of the vehicle 1 stops the vehicle 1 with the ignition turned ON". In addition, (4-B) of FIG. 11 illustrates changes in the resonance frequency RF, etc., in the case where "the fourth event Ev4 is performed when the driver stops the vehicle 1 with the ignition turned OFF".

The fourth event determination unit 234 calculates an amount of increase in a left current resonance frequency RFC(1) (the left wheel resonance frequency RF(1) calculated during restarted traveling) with respect to a left previous resonance frequency RFP(1) (the left wheel resonance frequency RF(1) calculated last during traveling immediately before stopping). In addition, the fourth event determination unit 234 calculates an amount of increase in a right current resonance frequency RFC(2) (the right wheel resonance frequency RF(2) calculated during restarted traveling) with respect to a right previous resonance frequency RFP(2) (the right wheel resonance frequency RF(2) calculated last during traveling immediately before stopping). Then, the fourth event determination unit 234 determines that the fourth event Ev4 has been performed during the stopped time ST, if both the "amount of increase in the left current resonance frequency RFC(1) with respect to the left previous resonance frequency RFP(1)" and the "amount of increase in the right current resonance frequency RFC(2) with respect to the right previous resonance frequency RFP(2)" are equal to or greater than a predetermined eighth threshold value Th8".

As illustrated in FIG. 11, the fourth event determination unit 234 may distinguish between the case where "the fourth event Ev4 is performed while the driver keeps the ignition of the vehicle 1 ON" and the case where "the driver turns the ignition of the vehicle 1 OFF and the fourth event Ev4 is performed". The fourth event determination unit 234 may detect that "the driver has turned the ignition of the vehicle 1 OFF and the fourth event Ev4 has been performed" as follows. Specifically, when the ignition is turned OFF and then turned ON after the stopped time ST equal to or longer than the reference stopped time RT (particularly, the fourth reference stopped time RT4) has elapsed, the left previous resonance frequency RFP(1) and the right previous resonance frequency RFP(2) may respectively be the resonance frequency RF(1) and the resonance frequency RF(2) calculated last during the previous IG cycle (previous trip). Similarly, the left current resonance frequency RFC(1) and the right current resonance frequency RFC(2) may respectively be the resonance frequency RF(1) and the resonance frequency RF(2) calculated during the current trip.

When air filling of all of the four tires TR (i.e., the fourth event Ev4) is performed, the difference between the previous resonance frequency RFP (the resonance frequency RF calculated last during traveling immediately before stopping) and the current resonance frequency RFC (the resonance frequency RF calculated during restarted traveling) shifts in the positive direction for both of the left and right tires TR. Therefore, the fourth event determination unit 234 determines whether the fourth event Ev4 has been performed during the stopped time ST, by using these changes in the resonance frequencies RF(1) and RF(2).

The eighth threshold value Th8 may be set for each tire TR and may be set, for example, as a parameter calculated from the "amount of change in the resonance frequency RF with respect to a different amount of deflation" for each tire TR. As one example, the eighth threshold value Th8 for each tire TR may be set as the "amount of change in the resonance frequency RF corresponding to 10% deflation", which is calculated for each tire TR (particularly, calculated also considering the "detection of a decrease in air pressure" for each tire TR).

The fourth reference stopped time RT4 may be set, for example, based on the "shortest time required by a typical driver to perform the fourth event Ev4 (air filling of all of the four wheels)" and as one example, the fourth reference stopped time RT4 may be set to approximately "240 seconds". However, the fourth reference stopped time RT4 may be set to be shorter than the above shortest time in order to increase the chances of detecting the fourth event Ev4. Alternatively, for example, considering a situation where automatic pressure adjustment devices are not widely used, the fourth reference stopped time RT4 may be set to be longer than the above shortest time.

### (Detection of fifth event)

The fifth event determination unit 235 determines whether the fifth event Ev5 has been performed during the stopped time ST. In the present embodiment, if the stop determination unit 21 determines that "the stopped time ST is equal to or greater than the fifth reference stopped time RT5", the fifth event determination unit 235 may determine whether the fifth event Ev5 has been performed during the stopped time ST. The fifth event determination unit 235 determines whether the fifth event Ev5 has been performed during the stopped time ST, by using the first deflation determination value DEL1 and the resonance frequencies RF(1) and RF(2).

FIG. 12 illustrates an image of a case where the fifth event determination unit 235 detects the fifth event Ev5. Specifically, (5-1) of FIG. 12 illustrates changes in the resonance frequency RF, etc., in the case where "the fifth event Ev5 is performed when the driver stops the vehicle 1 with the ignition turned OFF". In addition, (5-2) of FIG. 12 illustrates changes in the first deflation determination value DEL1, etc., in the case where "the fifth event Ev5 is performed when the driver stops the vehicle 1 with the ignition turned OFF".

The fifth event determination unit 235 first calculates the difference between the left previous resonance frequency RFP(1) and the right previous resonance frequency RFP(2). In addition, the fifth event determination unit 235 calculates the "absolute value of the difference between the left current resonance frequency RFC(1) and the left previous resonance frequency RFP(1)" and the "absolute value of the difference between the right current resonance frequency RFC(2) and the right previous resonance frequency RFP(2)". Furthermore, the fifth event determination unit 235 calculates the absolute value of the difference between the previous first deflation determination value D1P and the current first deflation determination value D1C. Then, the fifth event determination unit 235 first determines "whether the difference between the left previous resonance frequency RFP(1) and the right previous resonance frequency RFP(2) is equal to or greater than a predetermined ninth threshold value Th9".

When the difference between the left previous resonance frequency RFP(1) and the right previous resonance frequency RFP(2) is equal to or greater than the ninth threshold value Th9, the fifth event determination unit 235 determines that the fifth event Ev5 has been performed during the stopped time ST, if both of the following conditions are satisfied: "at least one of the 'absolute value of the difference between the left current resonance frequency RFC(1) and the left previous resonance frequency RFP(1)' and the 'absolute value of the difference between the right current resonance frequency RFC(2) and the right previous resonance frequency RFP(2)' is equal to or greater than a predetermined tenth threshold value Th10" and "the absolute value of the difference between the previous first deflation determination value D1P and the current first deflation determination value D1C is equal to or greater than a predetermined eleventh threshold value Th11".

When the difference between the left previous resonance frequency RFP(1) and the right previous resonance frequency RFP(2) is less than the ninth threshold value Th9, the fifth event determination unit 235 determines that the fifth event Ev5 has been performed during the stopped time ST, if both of the following conditions are satisfied: "both the 'absolute value of the difference between the left current resonance frequency RFC(1) and the left previous resonance frequency RFP(1)' and the 'absolute value of the difference between the right current resonance frequency RFC(2) and the right previous resonance frequency RFP(2)' are equal to or larger than the tenth threshold value Th10" and "the absolute value of the difference between the previous first deflation determination value D1P and the current first deflation determination value D1C is equal to or greater than the eleventh threshold value Th11".

When all of the four tires TR are replaced (i.e., the fifth event Ev5 is performed), the resonance frequency RF and the first deflation determination value DEL1 respectively change from the resonance frequency RF and the first deflation determination value DEL1 that are before the fifth event Ev5 is performed. Therefore, the fifth event determination unit 235 determines whether the fifth event Ev5 has been performed during the stopped time ST, by using the first deflation determination value DEL1 and the resonance frequencies RF(1) and RF(2). In particular, by using the difference between the left previous resonance frequency RFP(1) and the right previous resonance frequency RFP(2), the fifth event determination unit 235 can detect the fifth event Ev5 with high accuracy even when "the fifth event Ev5 (air filling of all of the four wheels) is performed in a state where deflation (air pressure decrease) has occurred in one wheel among the four tires TR".

Each of the ninth threshold value Th9 and the tenth threshold value Th10 may be set for each tire TR and may be set, for example, as a parameter calculated from the "amount of change in the resonance frequency RF with respect to a different amount of deflation" for each tire TR. As one example, each of the ninth threshold value Th9 and the tenth threshold value Th10 for each tire TR may be set as the "amount of change in the resonance frequency RF corresponding to 10% deflation", which is calculated for each tire TR (particularly, calculated also considering the "detection of a decrease in air pressure" for each tire TR). The eleventh threshold value Th11 may be set based on the variation of the first deflation determination value DEL1 at each time point T. For example, the "variation of the first deflation determination value DEL1" may be calculated from accumulated data regarding the first deflation determination value DEL1 at each time point T, and the eleventh threshold value Th11 may be set as a parameter based on the calculated "variation of the first deflation determination value DEL1".

### §3 Operation Example

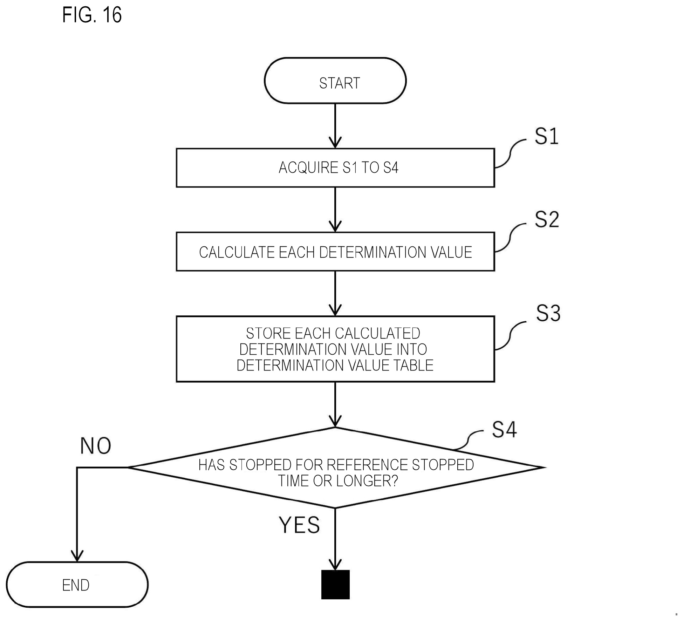

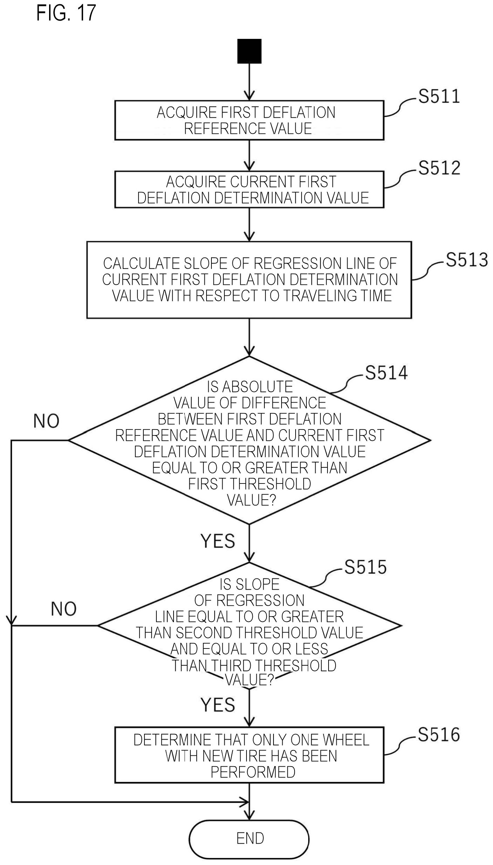

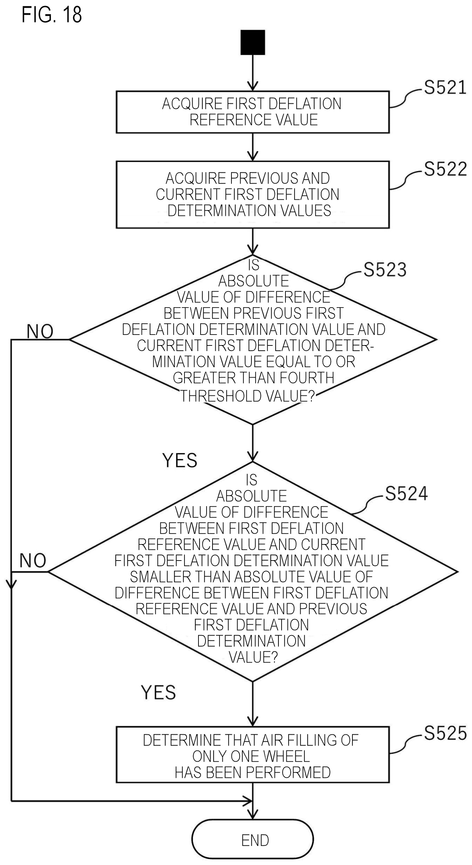

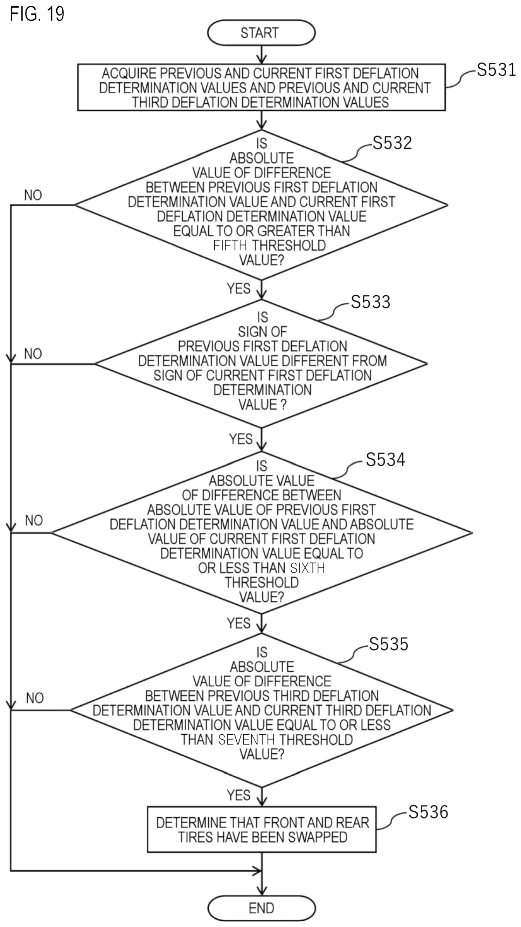

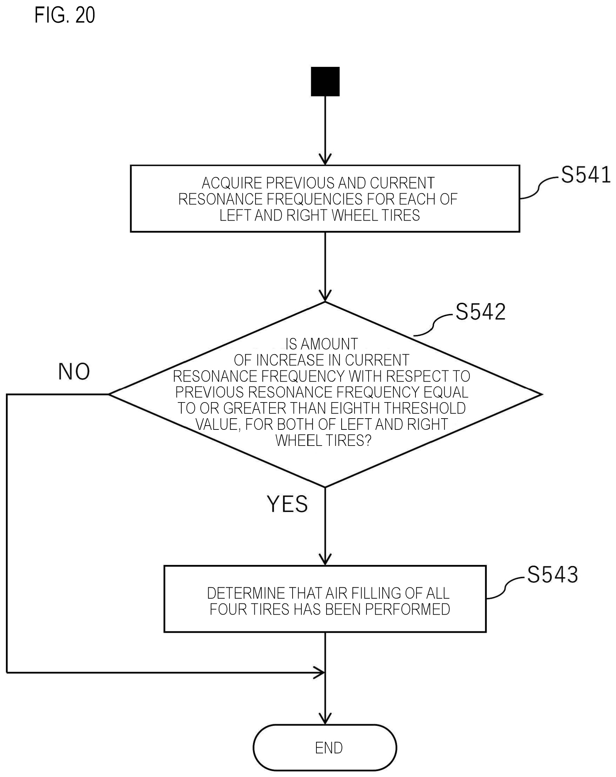

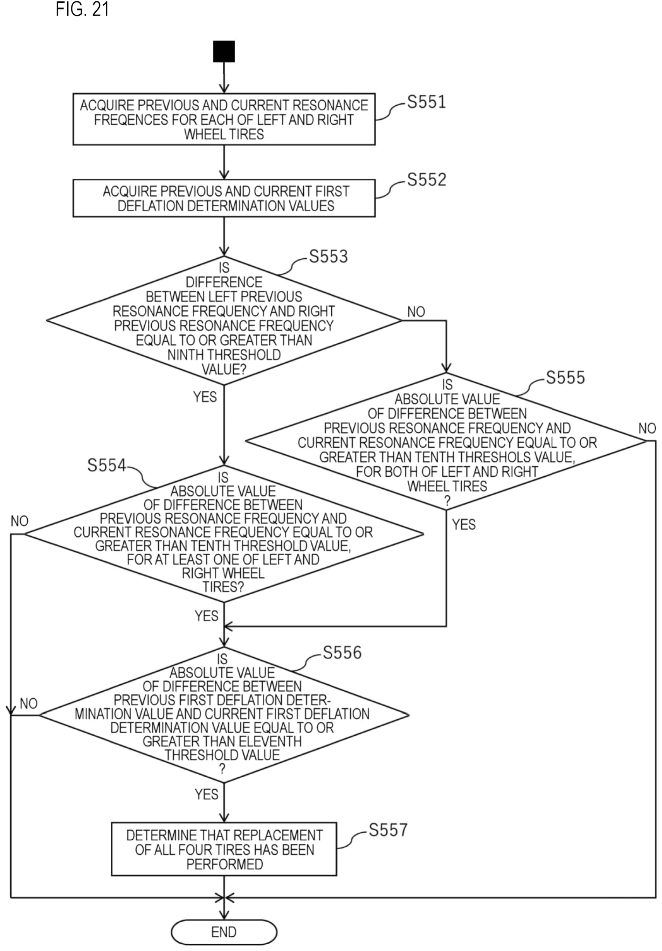

FIG. 13 to FIG. 18 are each a flowchart showing an example of the processing procedure of the detection device 2 according to the present embodiment. In particular, the processing procedure described with reference to FIG. 13 and FIG. 14 is an example of the processing procedure of an information processing method (detection method PM) for "determining whether the first event Ev1 has been performed". Here, as described above, in the detection method PM according to the present embodiment, "whether any of the second event Ev2, the third event Ev3, the fourth event Ev4, and the fifth event Ev5 has been performed" may be determined in addition to "whether the first event Ev1 has been performed". Therefore, an example of the processing procedure of the detection method PM for detecting each event Ev will be described below with reference to the respective drawings. Specifically, FIG. 13 is a flowchart showing the flow of a process common to five event detection processes including a first event detection process for detecting the first event Ev1, a second event detection process for detecting the second event Ev2, a third event detection process for detecting the third event Ev3, a fourth event detection process for detecting the fourth event Ev4, and fifth event detection process for detecting the fifth event Ev5. In addition, FIG. 14 is a flowchart showing the flow of a process specific to the first event detection process. FIG. 15 is a flowchart showing the flow of a process specific to the second event detection process, and FIG. 16 is a flowchart showing the flow of a process specific to the third event detection process. FIG. 17 is a flowchart showing the flow of a process specific to the fourth event detection process, and FIG. 18 is a flowchart showing the flow of a process specific to the fifth event detection process. However, the processing procedure described below is merely an example, and each step may be modified as much as possible. Furthermore, as for the processing procedure described below, depending on the embodiment, steps may be omitted, replaced, or added as appropriate.

### (Step S1)

In step S1, the CPU 12 operates as the acquisition unit 20 and acquires the rotation speed signal S1 which represents the rotation speed of the left front wheel FL, the rotation speed signal S2 which represents the rotation speed of the right front wheel FR, the rotation speed signal S3 which represents the rotation speed of the left rear wheel RL, and the rotation speed signal S4 which represents the rotation speed of the right rear wheel RR.

### (Step S2)

In step S2, the CPU 12 operates as the calculation unit 22 and calculates each determination value from the rotation speed signals S1, S2, S3, and S4 acquired in step S1. For example, the CPU 12 calculates the first deflation determination value DEL1, the second deflation determination value DEL2, the third deflation determination value DEL3, and the resonance frequencies RF(1) and RF(2) from the rotation speed signals S1, S2, S3, and S4 at each time point T while the vehicle 1 is traveling.

### (Step S3)

In step S3, the CPU 12 operates as the calculation unit 22 and stores each determination value calculated in step S2 into the determination value table 151. For example, the CPU 12 stores the first deflation determination value DEL1, the second deflation determination value DEL2, the third deflation determination value DEL3, and the resonance frequencies RF(1) and RF(2) calculated from the rotation speed signals S1, S2, S3, and S4 at each time point T, into the determination value table 151.

### (Step S4)

In step S4, the CPU 12 operates as the stop determination unit 21 and determines whether "the stopped time ST from when the vehicle 1 stops until the vehicle 1 restarts traveling" is equal to or longer than the reference stopped time RT. If the CPU 12 determines that the stopped time ST is equal to or longer than the reference stopped time RT (YES in step S4), the CPU 12 proceeds to step S5. If the CPU 12 determines that the stopped time ST is shorter than the reference stopped time RT (NO in step S4), the CPU 12 ends the process. It is not essential for the detection device 2 that the CPU 12 executes the process in step S4. In addition, in the present embodiment, the reference stopped time RT may be set for each event Ev, and the CPU 12 may compare the stopped time ST with each of the first reference stopped time RT1, the second reference stopped time RT2, the third reference stopped time RT3, the fourth reference stopped time RT4, and the fifth reference stopped time RT5.

### <Detection of first event>

In the detection method PM (in other words, the first event detection process for detecting the first event Ev1), after the CPU 12 executes step S1 to step S4 shown in FIG. 13, the CPU 12 further executes each step shown in FIG. 14. In each step in the first event detection process illustrated in FIG. 14, the CPU 12 operates as the event determination unit 23 (specifically, the first event determination unit 231). For example, if the CPU 12 determines in step S4 shown in FIG. 13 that "the stopped time ST is equal to or longer than the first reference stopped time RT1", the CPU 12 executes each step in the first event detection process illustrated in FIG. 14.

### (Steps S511, S512)

In step S511, the CPU 12 acquires the first deflation reference value RVD1, and in the present embodiment, the CPU 12 refers to the reference value table 152 in the storage device 15 and acquires the first deflation reference value RVD1. Next, in step S512, the CPU 12 acquires the current first deflation determination value DEL1, that is, acquires the current first deflation determination value D1C. In the present embodiment, the CPU 12 refers to the determination value table 151 in the storage device 15 and acquires the current first deflation determination value D1C.

### (Step S513)

In step S513, the CPU 12 calculates the slope of the regression line of the current first deflation determination value D1C with respect to the traveling time during restarted traveling. For example, the CPU 12 may calculate the "slope of the regression line of the current first deflation determination value D1C with respect to the traveling time during restarted traveling" from the first deflation determination value DEL1 at each time point T after the vehicle 1 started traveling, at the determination time point DP(2) by using an "algorithm that can remove noise from time-series data and accurately estimate a state" such as a Kalman filter. The determination time point DP(2) is, for example, the time point when the number of first deflation determination values DEL1 (current first deflation determination values D1C) calculated at each time point T after the vehicle 1 restarted traveling, which is required to calculate the above slope, has been accumulated.

### (Step S514)

In step S514, the CPU 12 determines "whether the absolute value of the difference between the first deflation reference value RVD1 and the current first deflation determination value D1C is equal to or greater than the first threshold value Th1". If the absolute value of the difference between the first deflation reference value RVD1 and the current first deflation determination value D1C is equal to or greater than the first threshold value Th1 (YES in step S514), the CPU 12 proceeds to step S515. If the absolute value of the difference between the first deflation reference value RVD1 and the current first deflation determination value D1C is less than the first threshold value Th1 (NO in step S514), the CPU 12 ends the first event detection process.

The CPU 12 may execute the process in step S514 before the process in step S513. For example, the CPU 12 may execute the process in step S514 at the determination time point DP(1) which is a time point after the vehicle 1 restarted traveling and is a time point before the determination time point DP(2). Then, if, at the determination time point DP(1), the absolute value of the difference between the first deflation reference value RVD1 and the current first deflation determination value D1C is less than the first threshold value Th1, the CPU 12 may end the first event detection process without executing the process in step S513. The determination time point DP(1) is, for example, the determination time point DP described thus far, and as one example, the determination time point DP(1) may be a time point T after the vehicle 1 restarted traveling and at least a predetermined number of determination values calculated at each time point T from the rotation speed signal S of each tire TR of the traveling vehicle 1 have been accumulated.

### (Steps S515, S516)

In step S515, the CPU 12 determines "whether the 'slope of the regression line of the current first deflation determination value D1C with respect to the traveling time during restarted traveling' which is calculated in step S513 is equal to or greater than the second threshold value Th2 and equal to or less than the third threshold value Th3". If the "slope of the regression line of the current first deflation determination value D1C with respect to the traveling time during restarted traveling" is equal to or greater than the second threshold value Th2 and equal to or less than the third threshold value Th3 (YES in step S515), the CPU 12 proceeds to step S516. If the "slope of the regression line of the current first deflation determination value D1C with respect to the traveling time during restarted traveling" is less than the second threshold value Th2 or greater than the third threshold value Th3 (NO in step S515), the CPU 12 ends the first event detection process. In step S516, the CPU 12 determines that the first event Ev1 has been performed during the stopped time ST. In step S516, the CPU 12 may further cause the display unit 3 to output a reset recommendation message urging the occupant of the vehicle 1 to reset each reference value RV. For example, the CPU 12 may cause the display unit 3 to output a message such as "the first event Ev1 was determined to have been performed during the stopped time ST. Please reset reference values RV".

### <Detection of second event>

As described above, in the detection method PM, in addition to the first event Ev1, the second event Ev2 may be detected, that is, the CPU 12 may execute the second event detection process in addition to the first event detection process. In the present embodiment, after the CPU 12 executes step S1 to step S4 shown in FIG. 13, the CPU 12 executes the second event detection process by executing each step shown in FIG. 15. For example, after the CPU 12 executes the first event detection process illustrated in FIG. 14, the CPU 12 may execute the second event detection process by executing each step shown in FIG. 15. Alternatively, by executing each step shown in FIG. 15 in parallel with the execution of each step shown in FIG. 14, the CPU 12 may execute the second event detection process in parallel with the execution of the first event detection process. In each step in the second event detection process illustrated in FIG. 15, the CPU 12 operates as the event determination unit 23 (specifically, the second event determination unit 232). For example, if the CPU 12 determines in step S4 shown in FIG. 13 that "the stopped time ST is equal to or longer than the second reference stopped time RT2", the CPU 12 executes each step in the second event detection process illustrated in FIG. 15.

### (Steps S521, S522)

In step S521, the CPU 12 acquires the first deflation reference value RVD1, and in the present embodiment, the CPU 12 refers to the reference value table 152 in the storage device 15 and acquires the first deflation reference value RVD1. Next, in step S522, the CPU 12 acquires the previous and current first deflation determination values DEL1, that is, acquires the previous first deflation determination value D1P and the current first deflation determination value D1C. In the present embodiment, the CPU 12 refers to the determination value table 151 in the storage device 15 and acquires the previous first deflation determination value D1P and the current first deflation determination value D1C.

### (Step S523)

In step S523, the CPU 12 determines "whether the absolute value of the difference between the previous first deflation determination value D1P and the current first deflation determination value D1C is equal to or greater than the fourth threshold value Th4". If the absolute value of the difference between the previous first deflation determination value D1P and the current first deflation determination value D1C is equal to or greater than the fourth threshold value Th4 (YES in step S523), the CPU 12 proceeds to step S524. If the absolute value of the difference between the previous first deflation determination value D1P and the current first deflation determination value D1C is less than the fourth threshold value Th4 (NO in step S523), the CPU 12 ends the second event detection process.

### (Steps S524, S525)

In step S524, the CPU 12 determines "whether the 'absolute value of the difference between the first deflation reference value RVD1 and the current first deflation determination value D1C' is smaller than the 'absolute value of the difference between the first deflation reference value RVD1 and the previous first deflation determination value D1P'". If the "absolute value of the difference between the first deflation reference value RVD 1 and the current first deflation determination value D1C" is smaller than the "absolute value of the difference between the first deflation reference value RVD1 and the previous first deflation determination value D1P" (YES in step S524), the CPU 12 proceeds to step S525. If the "absolute value of the difference between the first deflation reference value RVD1 and the previous first deflation determination value D1P" is equal to the "absolute value of the difference between the first deflation reference value RVD1 and the current first deflation determination value D1C" or the latter is greater than the former (NO in step S524), the CPU 12 ends the second event detection process. In step S525, the CPU 12 determines that the second event Ev2 has been performed during the stopped time ST. In step S525, the CPU 12 may further cause the display unit 3 to output a reset recommendation message urging the occupant of the vehicle 1 to reset each reference value RV. For example, the CPU 12 may cause the display unit 3 to output a message such as "the second event Ev2 was determined to have been performed during the stopped time ST. Please reset reference values RV".

### <Detection of third event>

As described above, in the detection method PM, in addition to the first event Ev1, the third event Ev3 may be detected, that is, the CPU 12 may execute the third event detection process in addition to the first event detection process. In the present embodiment, after the CPU 12 executes step S1 to step S4 shown in FIG. 13, the CPU 12 executes the third event detection process by executing each step shown in FIG. 16. For example, after the CPU 12 executes the first event detection process illustrated in FIG. 14, the CPU 12 may execute the third event detection process by executing each step shown in FIG. 16. Alternatively, by executing each step shown in FIG. 16 in parallel with the execution of each step shown in FIG. 14, the CPU 12 may execute the third event detection process in parallel with the execution of the first event detection process. In each step in the third event detection process illustrated in FIG. 16, the CPU 12 operates as the event determination unit 23 (specifically, the third event determination unit 233). For example, if the CPU 12 determines in step S4 shown in FIG. 13 that "the stopped time ST is equal to or longer than the third reference stopped time RT3", the CPU 12 executes each step in the third event detection process illustrated in FIG. 16.

### (Step S531)

In step S531, the CPU 12 acquires the previous and current first deflation determination values DEL1 and the previous and current third deflation determination values DEL3, that is, the previous first deflation determination value D1P, the current first deflation determination value D1C, the previous third deflation determination value D3P, and the current third deflation determination value D3C. In the present embodiment, the CPU 12 refers to the determination value table 151 in the storage device 15 and acquires the previous first deflation determination value D1P, the current first deflation determination value D1C, the previous third deflation determination value D3P, and the current third deflation determination value D3C.

### (Step S532)

In step S532, the CPU 12 determines "whether the absolute value of the difference between the previous first deflation determination value D1P and the current first deflation determination value D1C is equal to or greater than the fifth threshold value Th5". If the absolute value of the difference between the previous first deflation determination value D1P and the current first deflation determination value D1C is equal to or greater than the fifth threshold value Th5 (YES in step S532), the CPU 12 proceeds to step S533. If the absolute value of the difference between the previous first deflation determination value D1P and the current first deflation determination value D1C is less than the fifth threshold value Th5 (NO in step S532), the CPU 12 ends the third event detection process.

### (Step S533)

In step S533, the CPU 12 determines "whether the sign of the previous first deflation determination value D1P is different from the sign of the current first deflation determination value D1C". If the sign of the previous first deflation determination value D1P is different from the sign of the current first deflation determination value D1C (YES in step S533), the CPU 12 proceeds to step S534. If the sign of the previous first deflation determination value D1P is the same as the sign of the current first deflation determination value D1C (NO in step S533), the CPU 12 ends the third event detection process.

### (Step S534)

In step S534, the CPU 12 determines "whether the absolute value of the difference between the absolute value of the previous first deflation determination value D1P and the absolute value of the current first deflation determination value D1C is equal to or less than the sixth threshold value Th6". If the absolute value of the difference between the absolute value of the previous first deflation determination value D1P and the absolute value of the current first deflation determination value D1C is equal to or less than the sixth threshold value Th6 (YES in step S534), the CPU 12 proceeds to step S535. If the absolute value of the difference between the absolute value of the previous first deflation determination value D1P and the absolute value of the current first deflation determination value D1C is less than the sixth threshold value Th6 (NO in step S534), the CPU 12 ends the third event detection process.

### (Steps S535, S536)

In step S535, the CPU 12 determines "whether the absolute value of the difference between the previous third deflation determination value D3P and the current third deflation determination value D3C is equal to or less than the seventh threshold value Th7". If the absolute value of the difference between the previous third deflation determination value D3P and the current third deflation determination value D3C is equal to or less than the seventh threshold value Th7 (YES in step S535), the CPU 12 proceeds to step S536. If the absolute value of the difference between the previous third deflation determination value D3P and the current third deflation determination value D3C is greater than the seventh threshold value Th7 (NO in step S535), the CPU 12 ends the third event detection process. In step S536, the CPU 12 determines that the third event Ev3 has been performed during the stopped time ST. In step S536, the CPU 12 may further cause the display unit 3 to output a reset recommendation message urging the occupant of the vehicle 1 to reset each reference value RV. For example, the CPU 12 may cause the display unit 3 to output a message such as "the third event Ev3 was determined to have been performed during the stopped time ST. Please reset reference values RV".

### <Detection of fourth event>

As described above, in the detection method PM, in addition to the first event Ev1, the fourth event Ev4 may be detected, that is, the CPU 12 may execute the fourth event detection process in addition to the first event detection process. In the present embodiment, after the CPU 12 executes step S1 to step S4 shown in FIG. 13, the CPU 12 executes the fourth event detection process by executing each step shown in FIG. 17. For example, after the CPU 12 executes the first event detection process illustrated in FIG. 14, the CPU 12 may execute the fourth event detection process by executing each step shown in FIG. 17. Alternatively, by executing each step shown in FIG. 17 in parallel with the execution of each step shown in FIG. 14, the CPU 12 may execute the fourth event detection process in parallel with the execution of the first event detection process. In each step in the fourth event detection process illustrated in FIG. 17, the CPU 12 operates as the event determination unit 23 (specifically, the fourth event determination unit 234). For example, if the CPU 12 determines in step S4 shown in FIG. 13 that "the stopped time ST is equal to or longer than the fourth reference stopped time RT4", the CPU 12 executes each step in the fourth event detection process illustrated in FIG. 17.

### (Step S541)

In step S541, the CPU 12 acquires the previous and current resonance frequencies RF for each of the left and right wheel tires TR, that is, acquires the left previous resonance frequency RFP(1), the left current resonance frequency RFC(1), the right previous resonance frequency RFP(2), and the right current resonance frequency RFC(2). In the present embodiment, the CPU 12 refers to the determination value table 151 in the storage device 15 and acquires the left previous resonance frequency RFP(1), the left current resonance frequency RFC(1), the right previous resonance frequency RFP(2), and the right current resonance frequency RFC(2).

### (Steps S542, S543)

In step S542, the CPU 12 determines "whether, for both of the left and right wheel tires TR, the amount of increase in the current resonance frequency RFC with respect to the previous resonance frequency RFP is equal to or greater than the eighth threshold value Th8". In the present embodiment, the CPU 12 determines "whether both the 'amount of increase in the left current resonance frequency RFC(1) with respect to the left previous resonance frequency RFP(1)' and the 'amount of increase in the right current resonance frequency RFC(2) with respect to the right previous resonance frequency RFP(2)' are equal to or greater than the eighth threshold value Th8". If both the "amount of increase in the left current resonance frequency RFC(1) with respect to the left previous resonance frequency RFP(1)" and the "amount of increase in the right current resonance frequency RFC(2) with respect to the right previous resonance frequency RFP(2)" are equal to or greater than the eighth threshold value Th8 (YES in step S542), the CPU 12 proceeds to step S543. If at least one of the "amount of increase in the left current resonance frequency RFC(1) with respect to the left previous resonance frequency RFP(1)" and the "amount of increase in the right current resonance frequency RFC(2) with respect to the right previous resonance frequency RFP(2)" is less than the eighth threshold value Th8 (NO in step S542), the CPU 12 ends the fourth event detection process. In step S543, the CPU 12 determines that the fourth event Ev4 has been performed during the stopped time ST. In step S543, the CPU 12 may further cause the display unit 3 to output a reset recommendation message urging the occupant of the vehicle 1 to reset each reference value RV. For example, the CPU 12 may cause the display unit 3 to output a message such as "the fourth event Ev4 was determined to have been performed during the stopped time ST. Please reset reference values RV".

### <Detection of fifth event>

As described above, in the detection method PM, in addition to the first event Ev1, the fifth event Ev5 may be detected, that is, the CPU 12 may execute the fifth event detection process in addition to the first event detection process. In the present embodiment, after the CPU 12 executes step S1 to step S4 shown in FIG. 13, the CPU 12 executes the fifth event detection process by executing each step shown in FIG. 18. For example, after the CPU 12 executes the first event detection process illustrated in FIG. 14, the CPU 12 may execute the fifth event detection process by executing each step shown in FIG. 18. Alternatively, by executing each step shown in FIG. 18 in parallel with the execution of each step shown in FIG. 14, the CPU 12 may execute the fifth event detection process in parallel with the execution of the first event detection process. In each step in the fifth event detection process illustrated in FIG. 18, the CPU 12 operates as the event determination unit 23 (specifically, the fifth event determination unit 235). For example, if the CPU 12 determines in step S4 shown in FIG. 13 that "the stopped time ST is equal to or longer than the fifth reference stopped time RT5", the CPU 12 executes each step in the fifth event detection process illustrated in FIG. 18.

### (Step S551)

In step S551, the CPU 12 acquires the previous and current resonance frequencies RF for each of the left and right wheel tires TR, that is, acquires the left previous resonance frequency RFP(1), the left current resonance frequency RFC(1), the right previous resonance frequency RFP(2), and the right current resonance frequency RFC(2). In the present embodiment, the CPU 12 refers to the determination value table 151 in the storage device 15 and acquires the left previous resonance frequency RFP(1), the left current resonance frequency RFC(1), the right previous resonance frequency RFP(2), and the right current resonance frequency RFC(2).

### (Step S552)

In step S552, the CPU 12 acquires the previous and current first deflation determination values DEL1, that is, acquires the previous first deflation determination value D1P and the current first deflation determination value D1C. In the present embodiment, the CPU 12 refers to the determination value table 151 in the storage device 15 and acquires the previous first deflation determination value D1P and the current first deflation determination value D1C.

### (Step S553)

In step S553, the CPU 12 determines "whether the difference between the left previous resonance frequency RFP(1) and the right previous resonance frequency RFP(2) is equal to or greater than the ninth threshold value Th9". If the difference between the left previous resonance frequency RFP(1) and the right previous resonance frequency RFP(2) is equal to or greater than the ninth threshold value Th9 (YES in step S553), the CPU 12 proceeds to step S554. If the difference between the left previous resonance frequency RFP(1) and the right previous resonance frequency RFP(2) is less than the ninth threshold value Th9 (NO in step S553), the CPU 12 proceeds to step S555.

### (Step S554)

In step S554, the CPU 12 determines "whether, for at least one of the left and right wheel tires TR, the absolute value of the difference between the previous resonance frequency RFP and the current resonance frequency RFC is equal to or greater than the tenth threshold value Th10". In the present embodiment, the CPU 12 determines "whether at least one of the 'absolute value of the difference between the left current resonance frequency RFC(1) and the left previous resonance frequency RFP(1)' and the 'absolute value of the difference between the right current resonance frequency RFC(2) and the right previous resonance frequency RFP(2)' is equal to or greater than the tenth threshold value Th10". If at least one of the "absolute value of the difference between the left current resonance frequency RFC(1) and the left previous resonance frequency RFP(1)" and the "absolute value of the difference between the right current resonance frequency RFC(2) and the right previous resonance frequency RFP(2)" is equal to or greater than the tenth threshold value Th10 (YES in step S554), the CPU 12 proceeds to step S556. If both the "absolute value of the difference between the left current resonance frequency RFC(1) and the left previous resonance frequency RFP(1)" and the "absolute value of the difference between the right current resonance frequency RFC(2) and the right previous resonance frequency RFP(2)" are less than the tenth threshold value Th10 (NO in step S554), the CPU 12 ends the fifth event detection process.

### (Step S555)

In step S555, the CPU 12 determines "whether, for both of the left and right wheel tires TR, the absolute value of the difference between the previous resonance frequency RFP and the current resonance frequency RFC is equal to or greater than the tenth threshold value Th10". In the present embodiment, the CPU 12 determines "whether both the 'absolute value of the difference between the left current resonance frequency RFC(1) and the left previous resonance frequency RFP(1)' and the 'absolute value of the difference between the right current resonance frequency RFC(2) and the right previous resonance frequency RFP(2)' are equal to or greater than the tenth threshold value Th10". If both the "absolute value of the difference between the left current resonance frequency RFC(1) and the left previous resonance frequency RFP(1)" and the "absolute value of the difference between the right current resonance frequency RFC(2) and the right previous resonance frequency RFP(2)" are equal to or greater than the tenth threshold value Th10 (YES in step S555), the CPU 12 proceeds to step S556. If at least one of the "absolute value of the difference between the left current resonance frequency RFC(1) and the left previous resonance frequency RFP(1)" and the "absolute value of the difference between the right current resonance frequency RFC(2) and the right previous resonance frequency RFP(2)" is less than the tenth threshold value Th10 (NO in step S555), the CPU 12 ends the fifth event detection process.

### (Steps S556, S557)

In step S556, the CPU 12 determines "whether the absolute value of the difference between the previous first deflation determination value D1P and the current first deflation determination value D1C is equal to or greater than the eleventh threshold value Th11". If the absolute value of the difference between the previous first deflation determination value D1P and the current first deflation determination value D1C is equal to or greater than the eleventh threshold value Th11 (YES in step S556), the CPU 12 proceeds to step S557. If the absolute value of the difference between the previous first deflation determination value D1P and the current first deflation determination value D1C is less than the eleventh threshold value Th11 (NO in step S556), the CPU 12 ends the fifth event detection process. In step S557, the CPU 12 determines that the fifth event Ev5 has been performed during the stopped time ST. In step S557, the CPU 12 may further cause the display unit 3 to output a reset recommendation message urging the occupant of the vehicle 1 to reset each reference value RV. For example, the CPU 12 may cause the display unit 3 to output a message such as "the fifth event Ev5 was determined to have been performed during the stopped time ST. Please reset reference values RV".

### [Features]

As described above, the detection device 2 according to the present embodiment is a detection device capable of detecting a decrease in the air pressure of each of the four tires TR mounted on the vehicle 1. The detection device 2 includes the acquisition unit 20, the calculation unit 22, and the event determination unit 23. The acquisition unit 20 acquires the rotation speed signals S indicating the respective rotation speeds of the four tires TR included in the vehicle 1, and in the present embodiment, the acquisition unit 20 acquires four rotation speed signals S including the rotation speed signals S1, S2, S3, and S4. The calculation unit 22 calculates the first deflation determination value DEL1 from the above four rotation speed signals S. The first deflation determination value DEL1 is a deflation determination value DEL indicating a comparison between the sum of the rotation speeds of a pair of tires TR located on a diagonal line among the four tires TR and the sum of the rotation speeds of the other pair of tires TR located on a diagonal line. The event determination unit 23 determines whether the first event Ev1, which is "replacement of only one wheel among the four tires TR with a new tire", has been performed during the "stopped time ST from when the vehicle 1 stops until the vehicle 1 restarts traveling", by using the first deflation determination value DEL1. The event determination unit 23 determines that the first event Ev1 has been performed during the stopped time ST, if the absolute value of the difference between the current first deflation determination value D1C and the first deflation reference value RVD1 is equal to or greater than the first threshold value Th1 and the "slope of the regression line of the current first deflation determination value D1C with respect to the traveling time during restarted traveling" is equal to or greater than the second threshold value Th2 and equal to or less than the third threshold value Th3.

In the detection method PM according to the present embodiment, a computer (in the present embodiment, the CPU 12 of the detection device 2) is caused to execute steps S1 and S2 shown in FIG. 13 and steps S514, S515, and S516 shown in FIG. 14. In step S1, the CPU 12 acquires the rotation speed signals S indicating the respective rotation speeds of the four tires TR included in the vehicle 1, and in the present embodiment, the CPU 12 acquires four rotation speed signals S including the rotation speed signals S1, S2, S3, and S4. In step S2, the CPU 12 calculates the first deflation determination value DEL1 from the above four rotation speed signals S. In steps S514 and S515, the CPU 12 determines "whether the first event Ev1 has been performed during the stopped time ST", by using the first deflation determination value DEL1. In step S514, the CPU 12 determines "whether the absolute value of the difference between the current first deflation determination value D1C and the first deflation reference value RVD1 is equal to or greater than the first threshold value Th1". If the absolute value of the difference between the current first deflation determination value D1C and the first deflation reference value RVD1 is equal to or greater than the first threshold value Th1 (YES in step S514), the CPU 12 determines in step S515 "whether the 'slope of the regression line of the current first deflation determination value D1C with respect to the traveling time during restarted traveling' is equal to or greater than the second threshold value Th2 and equal to or less than the third threshold value Th3". If the "slope of the regression line of the current first deflation determination value D1C with respect to the traveling time during restarted traveling" is equal to or greater than the second threshold value Th2 and equal to or less than the third threshold value Th3 (YES in step S515), the CPU 12 determines that the first event Ev1 has been performed during the stopped time ST (step S516). In the present embodiment, the program 7 causes the computer (e.g., the CPU 12) to execute each step of the above detection method PM. The program 7 may be stored in the storage medium 8.

When the first event Ev1 is performed and only one wheel among the four tires TR is replaced with a new tire, the outer diameter of the new tire is increased due to a phenomenon of tire growth, causing the air pressure of the new tire to rise. Therefore, by using the first deflation determination value DEL1, the detection device 2 (detection method PM) detects the rise in the air pressure of the new tire, that is, determines whether the first event Ev1 has been performed during the stopped time ST. With this configuration, the detection device 2 (detection method PM) can determine with high accuracy whether the first event Ev1, which is "replacement of only one wheel among the four tires TR with a new tire", has been performed.

### §4 Modifications

Although the embodiment of the present invention has been described in detail above, the foregoing description is merely illustrative of the present invention in all aspects. It is needless to say that various improvements or modifications can be made without departing from the scope of the present invention. For example, the following changes are possible. In the following description, the same components as those in the above embodiment are denoted by the same reference characters, and the description of the same points as those in the above embodiment is omitted as appropriate. The following modifications may be combined as appropriate.

Regarding the specific hardware configuration of the detection device 2, components may be omitted, replaced, or added as appropriate depending on the embodiment. For example, processor resources may include multiple hardware processors. The hardware processors may each be configured as a microprocessor, an FPGA (field-programmable gate array), a DSP (digital signal processor), or the like. The detection device 2 may be configured using multiple computers. In this case, the hardware configuration of each computer may be the same or different. Furthermore, the detection device 2 may be a general-purpose server device, a PC (Personal Computer), or the like, in addition to an information processing device designed exclusively for services to be provided. Moreover, the detection device 2 may be implemented as a computer integrated with an ECU included in the vehicle 1, such as a travel management ECU (not shown) that manages traveling of the vehicle 1.

## Claims

1. A detection device (2) capable of detecting a decrease in air pressure of each of four tires (TR) mounted on a vehicle (1), the detection device (2) comprising:
an acquisition unit (20) configured to acquire rotation speed signals (S, S1, S2, S3, S4) indicating respective rotation speeds of the four tires (TR);
a calculation unit (22) configured to calculate a first deflation determination value (DEL1) indicating a comparison between a sum of rotation speeds of a pair of tires (TR) located on a diagonal line among the four tires (TR) and a sum of rotation speeds of another pair of tires (TR) located on a diagonal line, from the respective rotation speeds of the four tires (TR) indicated by the rotation speed signals (S, S1, S2, S3, S4); and
an event determination unit (23) configured to determine whether replacement of only one wheel among the four tires (TR) with a new tire has been performed during a stopped time (ST) from when the vehicle (1) stops until the vehicle (1) restarts traveling, by using the first deflation determination value (DEL1), wherein
the event determination unit (23) determines that replacement of only one wheel among the four tires (TR) with a new tire has been performed during the stopped time (ST), if
an absolute value of a difference between a current first deflation determination value (D1C) which is the first deflation determination value (DEL1) calculated during the restarted traveling and a first deflation reference value (RVD1) used for comparison with the first deflation determination value (DEL1) to detect the decrease in air pressure is equal to or greater than a predetermined first threshold value (Th1), and
a slope of a regression line of the current first deflation determination value (D1C) with respect to a traveling time during the restarted traveling is equal to or greater than a predetermined second threshold value (Th2) and equal to or less than a predetermined third threshold value (Th3).

2. The detection device (2) according to claim 1, wherein
the event determination unit (23) further determines whether air filling of only one wheel among the four tires (TR) has been performed during the stopped time (ST), by using the first deflation determination value (DEL1) and the first deflation reference value (RVD1), and
the event determination unit (23) determines that air filling of only one wheel among the four tires (TR) has been performed during the stopped time (ST), if
an absolute value of a difference between a previous first deflation determination value (D1P) which is the first deflation determination value (DEL1) calculated last during traveling immediately before the stopping and the current first deflation determination value (D1C) is equal to or greater than a predetermined fourth threshold value (Th4), and
an absolute value of a difference between the first deflation reference value (RVD1) and the current first deflation determination value (D1C) is smaller than an absolute value of a difference between the first deflation reference value (RVD1) and the previous first deflation determination value (D1P).

3. The detection device (2) according to claim 1 or 2, wherein
the calculation unit (22) further calculates a third deflation determination value (DEL3) indicating a comparison between a sum of rotation speeds of front and rear wheel tires (TR1, TR3) on a left side and a sum of rotation speeds of front and rear wheel tires (TR2, TR4) on a right side among the four tires (TR), from the respective rotation speeds of the four tires (TR) indicated by the rotation speed signals (S, S1, S2, S3, S4),
the event determination unit (23) further determines whether swapping of a left front wheel tire (TR1) and a left rear wheel tire (TR3) and swapping of a right front wheel tire (TR2) and a right rear wheel tire (TR4) among the four tires (TR) have been performed during the stopped time (ST), by using the first deflation determination value (DEL1) and the third deflation determination value (DEL3), and
the event determination unit (23) determines that swapping of the left front wheel tire (TR1) and the left rear wheel tire (TR3) and swapping of the right front wheel tire (TR2) and the right rear wheel tire (TR4) among the four tires (TR) have been performed during the stopped time (ST), if
an absolute value of a difference between a previous first deflation determination value (D1P) which is the first deflation determination value (DEL1) calculated last during traveling immediately before the stopping and the current first deflation determination value (D1C) is equal to or greater than a predetermined fifth threshold value (Th5),
a sign of the previous first deflation determination value (D1P) is different from a sign of the current first deflation determination value (D1C),
an absolute value of a difference between an absolute value of the previous first deflation determination value (D1P) and an absolute value of the current first deflation determination value (D1C) is equal to or less than a predetermined sixth threshold value (Th6), and
an absolute value of a difference between a previous third deflation determination value (D3P) which is the third deflation determination value (DEL3) calculated last during traveling immediately before the stopping and a current third deflation determination value (D3C) which is the third deflation determination value (DEL3) calculated during the restarted traveling is equal to or less than a predetermined seventh threshold value (Th7).

4. The detection device (2) according to any one of claims 1 to 3, wherein
the calculation unit (22) further calculates respective resonance frequencies (RF, RF(1), RF(2)) of left and right wheel tires (TR) on the same axle among the four tires (TR) from the rotation speed signals (S, S1, S2, S3, S4),
the event determination unit (23) further determines whether air filling of all of the four tires (TR) has been performed during the stopped time (ST), by using the respective resonance frequencies (RF, RF(1), RF(2)) of the left and right wheel tires (TR), and
the event determination unit (23) determines that air filling of all of the four tires (TR) has been performed during the stopped time (ST), if, for both of the left and right wheel tires (TR), an amount of increase in a current resonance frequency (RFC), which is the resonance frequency (RF) calculated during the restarted traveling, with respect to a previous resonance frequency (RFP) which is the resonance frequency (RF) calculated last during traveling immediately before the stopping is equal to or greater than a predetermined eighth threshold value (Th8).

5. The detection device (2) according to any one of claims 1 to 4, wherein
the calculation unit (22) further calculates respective resonance frequencies (RF, RF(1), RF(2)) of left and right wheel tires (TR) on the same axle among the four tires (TR) from the rotation speed signals (S, S1, S2, S3, S4),
the event determination unit (23) further determines whether replacement of all of the four tires (TR) has been performed during the stopped time (ST), by using the first deflation determination value (DEL1) and the respective resonance frequencies (RF, RF(1), RF(2)) of the left and right wheel tires (TR),
the event determination unit (23) determines whether a difference between a left previous resonance frequency (RFP(1)) which is the resonance frequency (RF(1)) calculated last during traveling immediately before the stopping for the left wheel tire (TR) among the left and right wheel tires (TR) and a right previous resonance frequency (RFP(2)) which is the resonance frequency (RF(2)) calculated last during traveling immediately before the stopping for the right wheel tire (TR) among the left and right wheel tires (TR) is equal to or greater than a predetermined ninth threshold value (Th9),
when the difference between the left previous resonance frequency (RFP(1)) and the right previous resonance frequency (RFP(2)) is equal to or greater than the ninth threshold value (Th9),
the event determination unit (23) determines that replacement of all of the four tires (TR) has been performed during the stopped time (ST), if
at least one of an absolute value of a difference between a left current resonance frequency (RFC(1)) which is the resonance frequency (RF(1)) calculated during the restarted traveling for the left wheel tire (TR) among the left and right wheel tires (TR) and the left previous resonance frequency (RFP(1)) and an absolute value of a difference between a right current resonance frequency (RFC(2)) which is the resonance frequency (RF(2)) calculated during the restarted traveling for the right wheel tire (TR) among the left and right wheel tires (TR) and the right previous resonance frequency (RFP(2)) is equal to or greater than a predetermined tenth threshold value (Th10), and
an absolute value of a difference between a previous first deflation determination value (D1P) which is the first deflation determination value (DEL1) calculated last during traveling immediately before the stopping and the current first deflation determination value (D1C) is equal to or greater than a predetermined eleventh threshold value (Th11), and
when the difference between the left previous resonance frequency (RFP(1)) and the right previous resonance frequency (RFP(2)) is less than the ninth threshold value (Th9),
the event determination unit (23) determines that replacement of all of the four tires (TR) has been performed during the stopped time (ST), if
both the absolute value of the difference between the left current resonance frequency (RFC(1)) and the left previous resonance frequency (RFP(1)) and the absolute value of the difference between the right current resonance frequency (RFC(2)) and the right previous resonance frequency (RFP(2)) are equal to or greater than the tenth threshold value (Th10), and
the absolute value of the difference between the previous first deflation determination value (D1P) and the current first deflation determination value (D1C) is equal to or greater than the eleventh threshold value (Th11).

6. A detection method (PM) comprising steps executed by a computer (12) configured to be capable of detecting a decrease in air pressure of each of four tires (TR) mounted on a vehicle (1), the steps including:
a step (S1) of acquiring rotation speed signals (S, S1, S2, S3, S4) indicating respective rotation speeds of the four tires (TR);
a step (S2) of calculating a first deflation determination value (DEL1) indicating a comparison between a sum of rotation speeds of a pair of tires (TR) located on a diagonal line among the four tires (TR) and a sum of rotation speeds of another pair of tires (TR) located on a diagonal line, from the respective rotation speeds of the four tires (TR) indicated by the rotation speed signals (S, S1, S2, S3, S4); and
a step (S514, S515, S516) of determining whether replacement of only one wheel among the four tires (TR) with a new tire has been performed during a stopped time (ST) from when the vehicle (1) stops until the vehicle (1) restarts traveling, by using the first deflation determination value (DELI), wherein
in the step (S514, S515, S516) of determining, the computer (12) determines that replacement of only one wheel among the four tires (TR) with a new tire has been performed during the stopped time (ST), if
an absolute value of a difference between a current first deflation determination value (D1C) which is the first deflation determination value (DEL1) calculated during the restarted traveling and a first deflation reference value (RVD1) used for comparison with the first deflation determination value (DEL1) to detect the decrease in air pressure is equal to or greater than a predetermined first threshold value (Th1), and
a slope of a regression line of the current first deflation determination value (D1C) with respect to a traveling time during the restarted traveling is equal to or greater than a predetermined second threshold value (Th2) and equal to or less than a predetermined third threshold value (Th3).

7. A detection program (7) for causing a computer (12), which is configured to be capable of detecting a decrease in air pressure of each of four tires (TR) mounted on a vehicle (1), to execute:
a step (S1) of acquiring rotation speed signals (S, S1, S2, S3, S4) indicating respective rotation speeds of the four tires (TR);
a step (S2) of calculating a first deflation determination value (DEL1) indicating a comparison between a sum of rotation speeds of a pair of tires (TR) located on a diagonal line among the four tires (TR) and a sum of rotation speeds of another pair of tires (TR) located on a diagonal line, from the respective rotation speeds of the four tires (TR) indicated by the rotation speed signals (S, S1, S2, S3, S4); and
a step (S514, S515, S516) of determining whether replacement of only one wheel among the four tires (TR) with a new tire has been performed during a stopped time (ST) from when the vehicle (1) stops until the vehicle (1) restarts traveling, by using the first deflation determination value (DELI), wherein
in the step (S514, S515, S516) of determining, the computer (12) determines that replacement of only one wheel among the four tires (TR) with a new tire has been performed during the stopped time (ST), if
an absolute value of a difference between a current first deflation determination value (D1C) which is the first deflation determination value (DEL1) calculated during the restarted traveling and a first deflation reference value (RVD1) used for comparison with the first deflation determination value (DEL1) to detect the decrease in air pressure is equal to or greater than a predetermined first threshold value (Th1), and
a slope of a regression line of the current first deflation determination value (D1C) with respect to a traveling time during the restarted traveling is equal to or greater than a predetermined second threshold value (Th2) and equal to or less than a predetermined third threshold value (Th3).
